(19) Europäisches Patentamt
European Patent Office
Office européen des brevets

(11) EP 4 070 909 B1

(12) **EUROPEAN PATENT SPECIFICATION**

(45) Date of publication and mention of the grant of the patent:
**03.04.2024 Bulletin 2024/14**

(21) Application number: **20895407.3**

(22) Date of filing: **30.11.2020**

(51) International Patent Classification (IPC):
***G05B 19/4103*** *(2006.01)* ***G05B 19/4069*** *(2006.01)*
***G05B 19/4097*** *(2006.01)* ***B23K 26/08*** *(2014.01)*
***B23K 26/082*** *(2014.01)* ***B23K 26/38*** *(2014.01)*
***B23K 37/02*** *(2006.01)* ***B23K 37/04*** *(2006.01)*

(52) Cooperative Patent Classification (CPC):
**B23K 26/38; B23K 26/082; B23K 26/0876; B23K 37/0235; B23K 37/0408; G05B 19/4069; G05B 19/4097; G05B 19/4103;** G05B 2219/36199; G05B 2219/45041

(86) International application number:
**PCT/JP2020/044510**

(87) International publication number:
**WO 2021/112039 (10.06.2021 Gazette 2021/23)**

(54) **COORDINATE PATTERN FILE CREATING DEVICE, TRAJECTORY PATTERN CREATING DEVICE, AND METHOD FOR CONTROLLING LASER PROCESSING MACHINE**

KOORDINATENMUSTERDATEIERZEUGENDE VORRICHTUNG, TRAJEKTORIENMUSTERERZEUGENDE VORRICHTUNG UND VERFAHREN ZUM STEUERN EINER LASERBEARBEITUNGSMASCHINE

DISPOSITIF DE CRÉATION DE FICHIER DE MODÈLE DE COORDONNÉES, DISPOSITIF DE CRÉATION DE MODÈLE DE TRAJECTOIRE ET PROCÉDÉ DE COMMANDE DE MACHINE DE TRAITEMENT LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2019 JP 2019217739**

(43) Date of publication of application:
**12.10.2022 Bulletin 2022/41**

(73) Proprietor: **Amada Co., Ltd.**
**Isehara-shi, Kanagawa 259-1196 (JP)**

(72) Inventors:
- **KAWAHARA, Chiaki**
**Isehara-shi, Kanagawa 259-1196 (JP)**
- **NISHIMURA, Tomohiro**
**Isehara-shi, Kanagawa 259-1196 (JP)**
- **IRIE, Shin**
**Isehara-shi, Kanagawa 259-1196 (JP)**

(74) Representative: **Grünecker Patent- und Rechtsanwälte PartG mbB**
**Leopoldstraße 4**
**80802 München (DE)**

(56) References cited:
**EP-A1- 2 508 293**
**JP-A- 2005 279 730**
**JP-A- 2012 218 030**
**US-A1- 2018 164 793**
**US-A1- 2019 111 516**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

Technical Field

The present disclosure relates to a coordinate pattern file creation device, a locus pattern creation device, and a method of controlling a laser processing machine.

Background Art

A laser processing machine that cut a sheet metal with a laser beam emitted from a laser oscillator to produce a product having a predetermined shape is widely used. Patent Literatures 1 and 2 describe cutting a sheet metal while vibrating a laser beam in a predetermined locus pattern (vibration pattern) by means of a galvano scanner unit.
Patent Application EP 2 508 293 A1 relates to a robot system, including a laser emitting portion capable of emitting a laser beam to a welding locus. This robot system includes a robot moving the laser emitting portion, and capable of scanning a welding locus with a laser beam at least in a state where the laser emitting portion does not move, and a control portion controlling the laser emitting portion to scan the welding locus with the laser beam in order to perform welding with weaving on the welding locus at least in the state where the laser emitting portion does not move.
Patent Application US 2018/164793 A1 relates to a laser processing robot system that carries out laser processing by using a robot. The laser processing robot system includes a laser irradiation device carrying out an irradiation point shifting operation, a robot moving the laser irradiation device, a laser irradiation device controller controlling the irradiation point shifting operation, and a robot controller controlling the robot. When the robot moves the laser irradiation device, the robot controller instructs the robot on a plurality of first interpolated positions at every first interpolation period, and outputs a command value associated with the irradiation point shifting operation to the laser irradiation device controller at every second interpolation period shorter than the first interpolation period.

Citation List

Patent Literature

Patent Literature 1: Japanese Patent No. 6592563
Patent Literature 2: Japanese Patent Application Laid-Open Publication No. 2019-155404

Summary

A galvano scanner unit includes a pair of scan mirrors, and vibrates a laser beam with which a sheet metal is irradiated by reciprocatively vibrating one or both of the pair of scan mirrors. Conventionally, a drive unit that drives the scan mirrors vibrates the scan mirrors in a sine wave shape. This is because it enables the drive unit to smoothly move the scan mirrors.
However, in the vibration method in which the scan mirrors are vibrated in the sine wave shape, a beam spot of the laser beam can be vibrated only in specific locus patterns as described in Patent Literature 2. The specific locus patterns include a parallel vibration pattern in which the beam spot of the laser beam is vibrated in a direction parallel to a cutting travelling direction, and an orthogonal vibration pattern in which the beam spot is vibrated in a direction orthogonal to the cutting travelling direction. Other specific locus patterns include a circular vibration pattern in which the beam spot is vibrated in such a manner as to draw a circle, an 8-shaped vibration pattern in which the beam spot is vibrated in such a manner as to draw a shape of the number eight, and a c-shaped vibration pattern in which the beam spot is vibrated in such a manner as to draw a shape of the alphabet C.
The locus pattern here is a pattern drawn only by vibrating the laser beam with the galvano scanner unit in a state in which a processing head that emits the laser beam is not moved. The actual locus pattern when the sheet metal is cut is a locus pattern in which a displacement due to a movement of the processing head is added to the locus pattern by the galvano scanner unit.
It is desirable to be able to vibrate the scan mirrors not only in the sine wave shape but also in waveform shapes other than the sine wave so that the laser beam can be vibrated in various locus patterns not limited to the specific locus patterns as described above. In the past, a method of controlling the scan mirrors capable of vibrating the scan mirrors in an arbitrary waveform shape including the waveform other than the sine wave has not been established.
Therefore, a locus pattern creation device for vibrating the laser beam in an arbitrary waveform shape and a method of controlling a laser processing machine capable of vibrating the laser beam in the arbitrary waveform shape to process the sheet metal are required. Further, a coordinate pattern file creation device capable of creating a coordinate pattern file for determining a locus pattern after confirming in advance in what locus patterns the laser beam can be vibrated is required.

An object of one or more embodiments is to provide a coordinate pattern file creation device capable of creating a coordinate pattern file for determining a locus pattern after confirming in advance the locus pattern to be drawn by a beam spot of a laser beam. An object of the present invention is to provide a locus pattern creation device capable of creating the locus pattern for vibrating the laser beam in an arbitrary waveform shape, and a method of controlling a laser machine capable of vibrating the laser beam in the arbitrary waveform shape to process the sheet metal.
The above objects are achieved by the present invention defined by the features of the independent claims, with preferred embodiments being specified in the dependent claims. References to embodiments which do not fall under the scope of the claims are to be understood as examples useful for understanding the invention.

According to a first aspect of the one or more embodiments, a coordinate pattern file creation device is provided according to claim 1.

According to a second aspect of the one or more embodiments, a locus pattern creation device is provided according to claim 6.

According to a third aspect of the one or more embodiments, a method for controlling, by an NC device, a laser processing machine is provided according to claim 10.

According to the coordinate pattern file creation device of the one or more embodiments, it is possible to create a coordinate pattern file for determining a locus pattern after confirming in advance the locus pattern to be drawn by a beam spot of a laser beam. According to the locus pattern creation device of the present invention, it is possible to create the locus pattern for vibrating the laser beam in an arbitrary waveform shape. According to the method of controlling a laser processing machine of the present invention, the laser beam can be vibrated in an arbitrary waveform shape to process a sheet metal.

Brief Description of Drawings

[Figure 1] Figure 1 is a diagram showing an overall configuration example of a laser processing machine.
[Figure 2] Figure 2 is a perspective view showing a detailed configuration example of a collimator unit and a processing head in the laser processing machine.
[Figure 3] Figure 3 is a diagram illustrating a displacement of an irradiation position on a sheet metal of a laser beam by a beam vibration mechanism.
[Figure 4] Figure 4 is a block diagram showing a coordinate pattern file creation device of one or more embodiments.
[Figure 5] Figure 5 is a block diagram showing a computer device constituting the coordinate pattern file creation device of the one or more embodiments.
[Figure 6] Figure 6 is a diagram showing an 8-shaped vibration pattern.
[Figure 7] Figure 7 is a flowchart showing processing executed by the coordinate pattern file creation device of the one or more embodiments.
[Figure 8] Figure 8 is a flowchart showing detailed processing of step S205 of Figure 7.
[Figure 9] Figure 9 is a diagram showing a coordinate value input window displayed on a display unit by the coordinate pattern file creation device of the one or more embodiments.
[Figure 10] Figure 10 is a diagram showing a state in which a coordinate pattern is input to the coordinate value input window, the coordinate pattern composed of coordinate values for obtaining the 8-shaped vibration pattern shown in Figure 6.
[Figure 11] Figure 11 is a diagram showing a locus pattern display window that includes a locus pattern created by the coordinate pattern file creation device of the one or more embodiments based on the coordinate pattern shown in Figure 10 under the simulation conditions that a moving velocity of the processing head is 6000 mm/min, amplitudes Qx and Qy are respectively 100 μm, a frequency is 1000 Hz, an angle is 0 degrees, and an interpolation calculation formula is natural spline interpolation.
[Figure 12] Figure 12 is a diagram showing the locus pattern display window in which the moving velocity of the processing head is changed to 3000 mm/min.
[Figure 13] Figure 13 is a diagram showing the locus pattern display window in which the moving velocity of the processing head is changed to 9000 mm/min.
[Figure 14] Figure 14 is a diagram showing the locus pattern display window in which the amplitudes Qx and Qy are changed to 200 μm, respectively.
[Figure 15] Figure 15 is a diagram showing the locus pattern display window in which the amplitudes Qx and Qy are changed to 50 μm, respectively.

[Figure 16] Figure 16 is a diagram showing the locus pattern display window in which the frequency is changed to 2000 Hz.

[Figure 17] Figure 17 is a diagram showing the locus pattern display window in which the frequency is changed to 500 Hz.

[Figure 18] Figure 18 is a diagram showing the locus pattern display window in which the angle is changed to 90 degrees.

[Figure 19] Figure 19 is a diagram showing the locus pattern display window in which the interpolation calculation formula is changed to Akima spline interpolation.

[Figure 20] Figure 20 shows characteristic diagrams showing respective amplitude changes in the time direction of the x-axis direction and the y-axis direction in the 8-shaped vibration pattern shown in Figure 6.

[Figure 21] Figure 21 is a diagram showing a locus pattern in a substantially triangular shape.

[Figure 22] Figure 22 is a diagram showing a state in which a coordinate pattern composed of coordinate values for obtaining the locus pattern in the substantially triangular shape shown in Figure 21 is input to the coordinate value input window.

[Figure 23] Figure 23 is a diagram showing a locus pattern obtained by the coordinate pattern shown in Figure 22.

[Figure 24] Figure 24 is a diagram showing the locus pattern display window that includes the locus pattern created by the coordinate pattern file creation device of the one or more embodiments based on the coordinate pattern shown in Figure 22 under the simulation conditions that the moving velocity of the processing head is 2000 mm/min, the amplitudes Qx and Qy are respectively 100 μm, the frequency is 2000 Hz, the angle is 0 degrees, and the interpolation calculation formula is the natural spline interpolation.

[Figure 25] Figure 25 is a diagram showing the locus pattern display window that includes a locus pattern in a state in which a distance between the coordinates is determined not to be within a limit value.

[Figure 26] Figure 26 shows characteristic diagrams showing respective amplitude changes in the time direction of the x-axis direction and the y-axis direction of the locus pattern in the substantially triangular shape shown in Figure 21.

[Figure 27] Figure 27 is a diagram showing a coordinate pattern obtained by deforming the coordinate pattern shown in Figure 22.

[Figure 28] Figure 28 is a diagram showing a locus pattern obtained by the coordinate pattern shown in Figure 27.

[Figure 29] Figure 29 is a block diagram showing an NC device including the locus pattern creation device of the one or more embodiments.

[Figure 30] Figure 30 is a flowchart showing processing executed by the locus pattern creation device of the one or more embodiments, which is partial processing of a method of controlling the laser processing machine of the one or more embodiments.

[Figure 31] Figure 31 is a partial plan view showing a sheet metal including a plurality of holes formed therein.

[Figure 32A] Figure 32A is a diagram partially showing a processing program for the NC device to process the sheet metal as shown in Figure 31 in the one or more embodiments.

[Figure 32B] Figure 32B is a diagram partially showing a conventional processing program for the NC device to process the sheet metal as shown in Figure 31.

[Figure 33] Figure 33 is a diagram showing a state in which a coordinate pattern composed of coordinate values for obtaining a circular vibration pattern is input to the coordinate value input window displayed on the display unit by the coordinate pattern file creation device of the one or more embodiments.

[Figure 34] Figure 34 is a diagram showing the locus pattern display window that includes the locus pattern created by the coordinate pattern file creation device of the one or more embodiments based on the coordinate pattern shown in Figure 33 under the simulation conditions that the moving velocity of the processing head is 0 mm/min, the amplitudes Qx and Qy are respectively 100 μm, the frequency is 1000 Hz, the angle is 0 degrees, and the interpolation calculation formula is the Akima spline interpolation.

[Figure 35A] Figure 35A is a diagram showing a state in which the laser beam is vibrated in the circular locus pattern shown in Figure 34.

[Figure 35B] Figure 35B is a diagram showing a state in which the laser beam located at the center of an opening of a nozzle is displaced in the direction of the end portion of the opening and then vibrated in the circular locus pattern shown in Figure 34.

Description of Embodiments

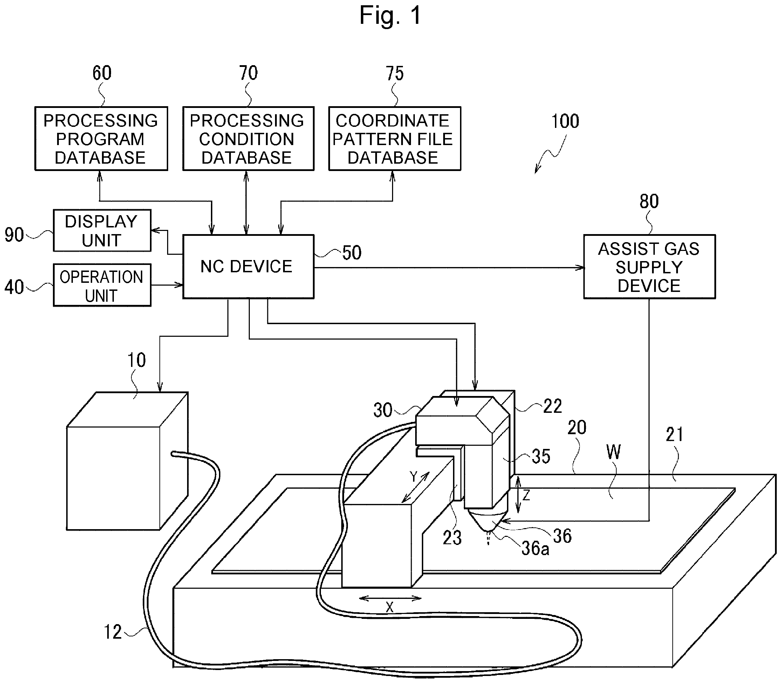

Hereinafter, the coordinate pattern file creation device, the locus pattern creation device, and the method of controlling the laser processing machine of the one or more embodiments will be described with reference to the attached drawings. First, with reference to Figures 1 to 3, a configuration example of the laser processing machine including a galvano scanner unit and capable of cutting a sheet metal while vibrating a laser beam in a predetermined locus pattern will be described.

In Figure 1, a laser processing machine 100 includes a laser oscillator 10 that generates and emits a laser beam, a laser processing unit 20, and a process fiber 12 that transmits the laser beam emitted from the laser oscillator 10 to the laser processing unit 20. Further, the laser processing machine 100 includes an operation unit 40, an NC device 50, an assist gas supply device 80, and a display unit 90. The NC device 50 is an example of a control device that controls each part of the laser processing machine 100.

A processing program database 60, a processing condition database 70, and a coordinate pattern file database 75 are connected to the NC device 50. The processing program database 60, the processing condition database 70, and the coordinate pattern file database 75 may be provided in the laser processing machine 100, or may be provided outside the laser processing machine 100. In the latter case, the processing program database 60, the processing condition database 70, and the coordinate pattern file database 75 may be configured to be connected to the laser processing machine 100 via a network.

As the laser oscillator 10, a preferable laser oscillator is the one that amplifies an excitation beam emitted from a laser diode and emits a laser beam having a predetermined wavelength, or the one that directly uses the laser beam emitted from the laser diode. The laser oscillator 10 is, for example, a solid laser oscillator, a fiber laser oscillator, a disk laser oscillator, or a direct diode laser oscillator (a DDL oscillator).

The laser oscillator 10 emits a laser beam in a 1 $\mu$m band having a wavelength of 900 nm to 1100 nm. Taking the fiber laser oscillator and the DDL oscillator as examples, the fiber laser oscillator emits a laser beam having a wavelength of 1060 nm to 1080 nm, and the DDL oscillator emits a laser beam having a wavelength of 910 nm to 950 nm.

The laser processing unit 20 includes a processing table 21 on which a sheet metal W to be processed is placed, a gate-shaped X-axis carriage 22, a Y-axis carriage 23, a collimator unit 30 fixed to the Y-axis carriage 23, and a processing head 35. The X-axis carriage 22 is configured to be movable in the X-axis direction on the processing table 21. The Y-axis carriage 23 is configured to be movable on the X-axis carriage 22 in the Y-axis direction perpendicular to the X-axis. The X-axis carriage 22 and the Y-axis carriage 23 function as a moving mechanism for moving the processing head 35 along the surface of the sheet metal W in the X-axis direction, the Y-axis direction, or a direction in which the X-axis direction and the Y-axis direction are arbitrarily combined.

Instead of moving the processing head 35 along the surface of the sheet metal W, the processing head 35 may be configured such that the position thereof is fixed and the sheet metal W moves. The laser processing machine 100 may include a moving mechanism for relatively moving the processing head 35 with respect to the surface of the sheet metal W.

The processing head 35 includes a circular opening 36a at the tip end portion thereof, and a nozzle 36 that emits a laser beam from the opening 36a is attached thereto. The sheet metal W is irradiated with the laser beam emitted from the opening 36a of the nozzle 36. The assist gas supply device 80 supplies nitrogen, oxygen, a mixed gas of nitrogen and oxygen, or air as an assist gas to the processing head 35. When the sheet metal W is processed, the assist gas is blown onto the sheet metal W from the opening 36a. The assist gas discharges a molten metal within a calf width in which the sheet metal W is melted.

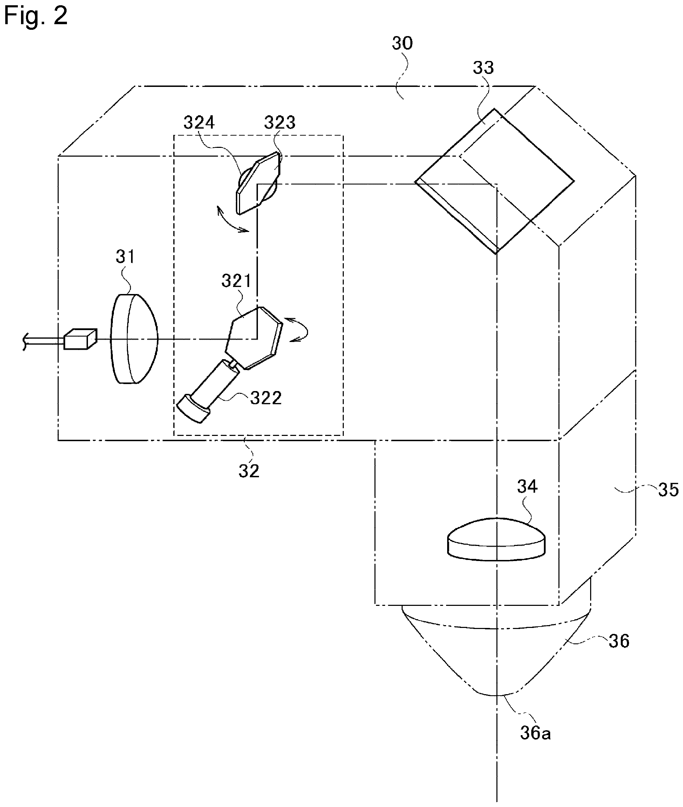

As shown in Figure 2, the collimator unit 30 includes a collimation lens 31 that converts the laser beam, which is a divergent beam emitted from the process fiber 12, into a parallel beam (a collimated beam). Further, the collimator unit 30 includes a galvano scanner unit 32, and a bend mirror 33 that reflects the laser beam emitted from the galvano scanner unit 32 downward in the Z-axis direction perpendicular to the X-axis and the Y-axis. The processing head 35 includes a focusing lens 34 that focuses the laser beam reflected by the bend mirror 33 to irradiate the sheet metal W with the laser beam.

In order to adjust the focus position of the laser beam, the focusing lens 34 is configured to be movable in a direction approaching the sheet metal W and a direction away from the sheet metal W by means of an unillustrated drive unit and moving mechanism.

The laser processing machine 100 is centered so that the laser beam emitted from the opening 36a of the nozzle 36 is located at the center of the opening 36a. In the reference state, the laser beam is emitted from the center of the opening 36a. The galvano scanner unit 32 functions as a beam vibration mechanism for vibrating the laser beam, which moves in the processing head 35 and is emitted from the opening 36a, in the opening 36a.

The galvano scanner unit 32 includes a scan mirror 321 that reflects the laser beam emitted from the collimation lens 31, and a drive unit 322 that rotates the scan mirror 321 in such a manner as to have a predetermined angle. Further, the galvano scanner unit 32 includes a scan mirror 323 that reflects the laser beam emitted from the scan mirror 321 and a drive unit 324 that rotates the scan mirror 323 in such a manner as to have a predetermined angle. The drive units 322 and 324 can be configured by a motor.

The drive units 322 and 324 can reciprocatively vibrate the scan mirrors 321 and 323 within a predetermined angle range, respectively, based on the control by the NC device 50. By reciprocatively vibrating either one or both of the scan mirrors 321 and 323, the galvano scanner unit 32 vibrates the laser beam with which the sheet metal W is irradiated.

The galvano scanner unit 32 is an example of the beam vibration mechanism, and the beam vibration mechanism is not limited to the galvano scanner unit 32 including the pair of scan mirrors.

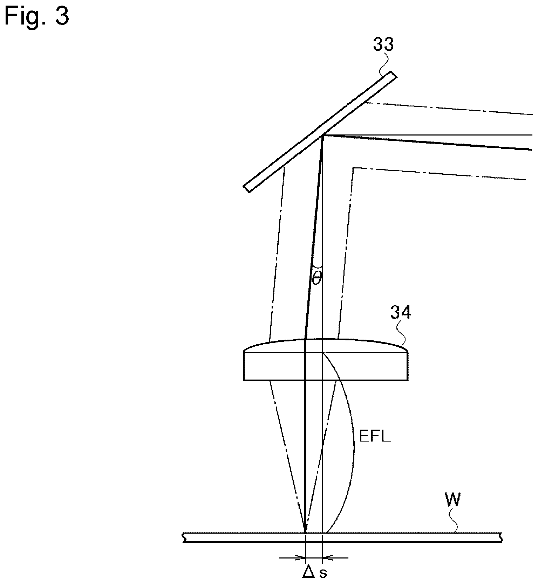

Figure 3 shows a state in which either one or both of the scan mirrors 321 and 323 are tilted and the position of the laser beam with which the sheet metal W is irradiated is displaced. In Figure 3, the fine solid line that is bent by the bend mirror 33 and passes through the focusing lens 34 indicates the optical axis of the laser beam when the laser processing machine 100 is in the reference state.

It should be noted that specifically, by operating the galvano scanner unit 32 located in front of the bend mirror 33, the angle of the optical axis of the laser beam to be made incident on the bend mirror 33 is changed, which causes the optical axis to deviate from the center of the bend mirror 33. In Figure 3, for simplification, the incident position of the laser beam on the bend mirror 33 is set to the same position before and after the operation of the galvano scanner unit 32.

It is assumed that the optical axis of the laser beam is displaced from the position indicated by the thin solid line to the position indicated by the thick solid line due to the action of the galvano scanner unit 32. Assuming that the laser beam reflected by the bend mirror 33 is tilted at an angle $\theta$, the irradiation position on the sheet metal W of the laser beam is displaced by a distance $\Delta s$. Assuming that the focal length of the focusing lens 34 is EFL (Effective Focal Length), the distance $\Delta s$ is calculated by EFL $\times \sin\theta$.

If the galvano scanner unit 32 tilts the laser beam by the angle $\theta$ in the direction opposite to the direction shown in Figure 3, the irradiation position on the sheet metal W of the laser beam can be displaced by the distance $\Delta s$ in the direction opposite to the direction shown in Figure 3. The distance $\Delta s$ is a distance less than a radius of the opening 36a, and preferably a distance equal to or less than the maximum distance when the distance obtained by subtracting a predetermined margin from the radius of the opening 36a is the maximum distance.

The NC device 50 can vibrate the laser beam in a predetermined direction in the surface of the sheet metal W by controlling the drive units 322 and 324 of the galvano scanner unit 32. By vibrating the laser beam, a beam spot formed on the surface of the sheet metal W can be vibrated.

The laser processing machine 100 configured as described above cuts the sheet metal W by means of the laser beam emitted from the laser oscillator 10 to produce a product having a predetermined shape. The laser processing machine 100 locates the focal point of the laser beam at an appropriate position of any one from within the thickness of the sheet metal W, on the top surface of the sheet metal W, above the top surface by a predetermined distance, or below the top surface by a predetermined distance, and cuts the sheet metal while vibrating the laser beam in a predetermined locus pattern.

The processing program database 60 stores a processing program for cutting the sheet metal W. The NC device 50 reads out the processing program from the processing program database 60 and selects one of a plurality of processing condition files stored in the processing condition database 70. The NC device 50 controls the laser processing machine 100 so as to cut the sheet metal W based on the processing conditions set in the read processing program and the selected processing condition file.

The coordinate pattern file database 75 stores a coordinate pattern file that is used when a locus pattern for vibrating the laser beam is determined. The details of the coordinate pattern file will be described later. When the NC device 50 vibrates the laser beam at the time of cutting the sheet metal W, the NC device 50 reads out a desired coordinate pattern file from the coordinate pattern file database 75. The NC device 50 uses the read coordinate pattern file to determine a locus pattern, and controls the galvano scanner unit 32 so as to vibrate the laser beam.

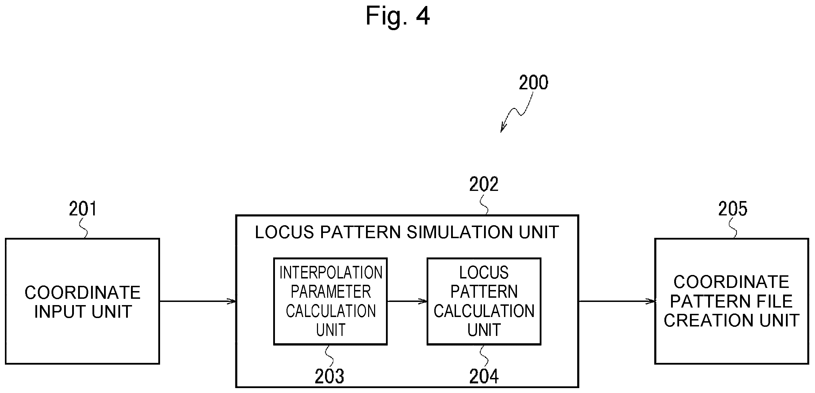

Figure 4 shows a coordinate pattern file creation device 200 of one or more embodiments capable of simulating the locus pattern to create the coordinate pattern file. The coordinate pattern file creation device 200 includes a coordinate input unit 201, a locus pattern simulation unit 202, and a coordinate pattern file creation unit 205. The locus pattern simulation unit 202 includes an interpolation parameter calculation unit 203 and a locus pattern calculation unit 204.

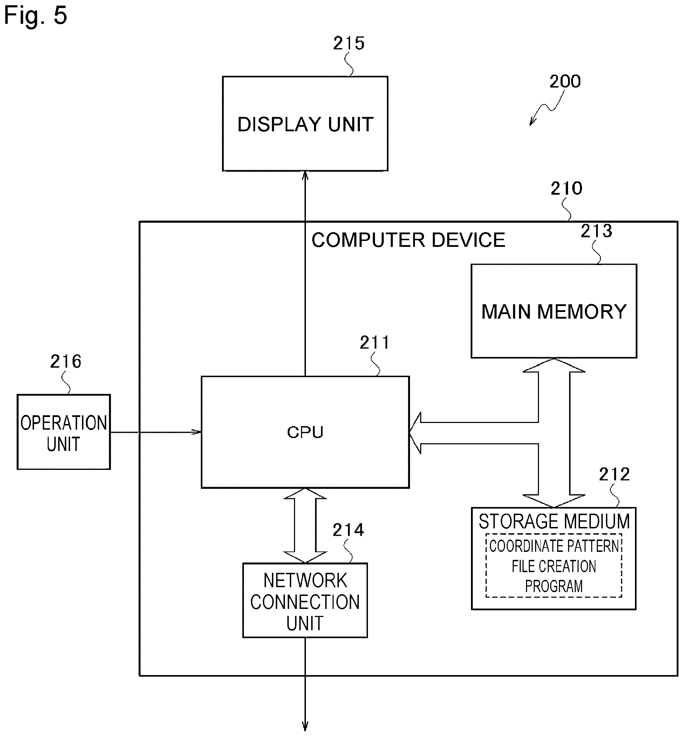

The coordinate pattern file creation device 200 shown in Figure 4 can be configured by a computer device 210 shown in Figure 5. In Figure 5, the computer device 210 includes a central processing unit (CPU) 211, a non-transitory storage medium 212, a main memory 213, and a network connection unit 214. The computer device 210 is provided with a display unit 215 and an operation unit 216, or the display unit 215 and the operation unit 216 are connected to the computer device 210. The storage medium 212 stores a coordinate pattern file creation program that is a computer program for creating the coordinate pattern file.

The coordinate pattern file creation device 200 shown in Figure 4 is configured by the CPU 211 loading the coordinate pattern file creation program into the main memory 213 and executing the coordinate pattern file creation program. The display unit 215 and the operation unit 216 function as the coordinate input unit 201. The operation unit 216 may be a keyboard, or a touch panel that is mounted on a screen of the display unit 215. When the CPU 211 executes the coordinate pattern file creation program, the functions of the locus pattern simulation unit 202 and the coordinate pattern file creation unit 205 are realized.

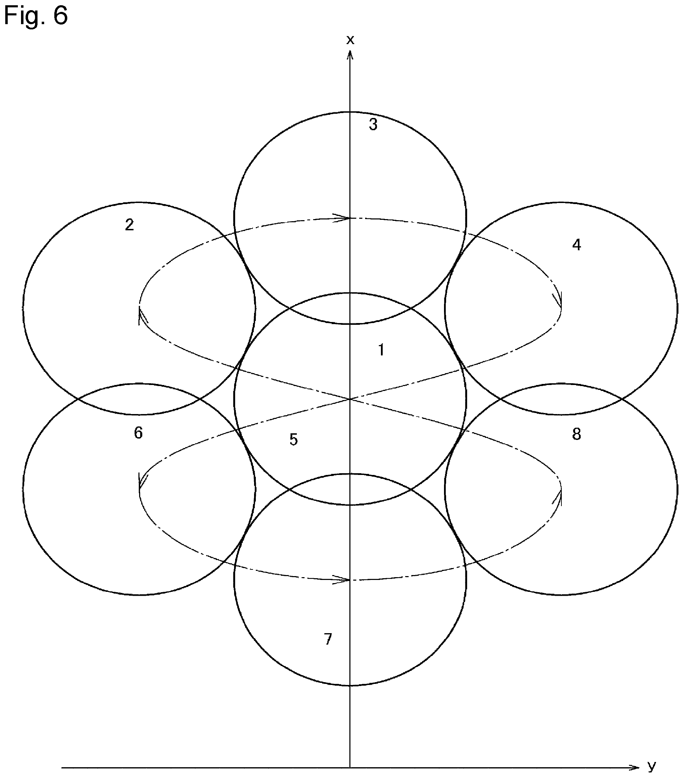

Taking a case in which the beam spot is vibrated in the 8-shaped vibration pattern shown in Figure 6, a description will be given on how the coordinate pattern file creation device 200 shown in Figure 4 creates a coordinate pattern file for obtaining the 8-shaped vibration pattern. In Figure 6, the beam spot represented by a circle vibrates in such a manner as to move in the order indicated by the numbers in the beam spots. The beam spot at the position indicated by the number 8 moves to the position indicated by the number 1, and repeats vibrating. The 8-shaped vibration pattern shown in Figure 6 is a pattern drawn only by the galvano scanner unit 32 vibrating the beam spot while the processing head 35 is not moving.

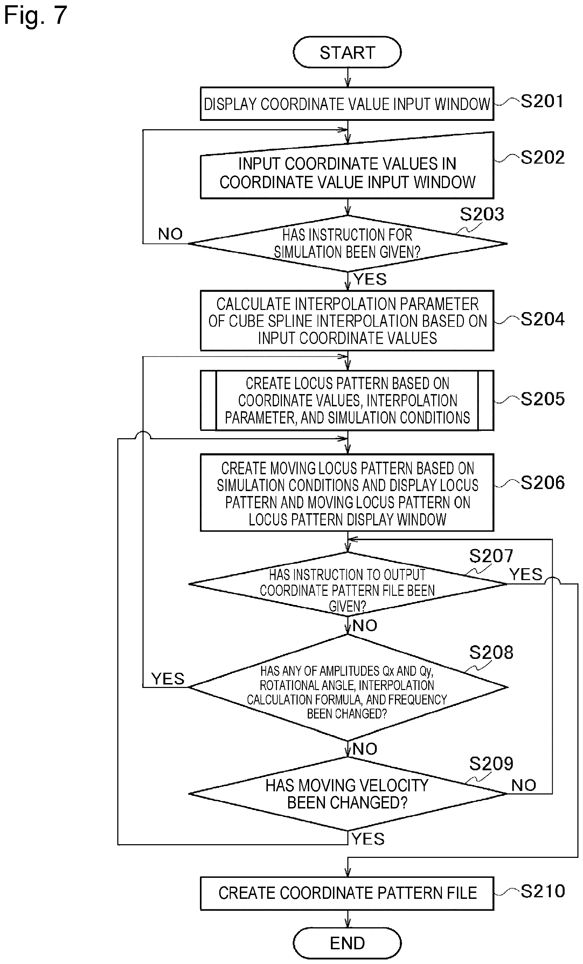

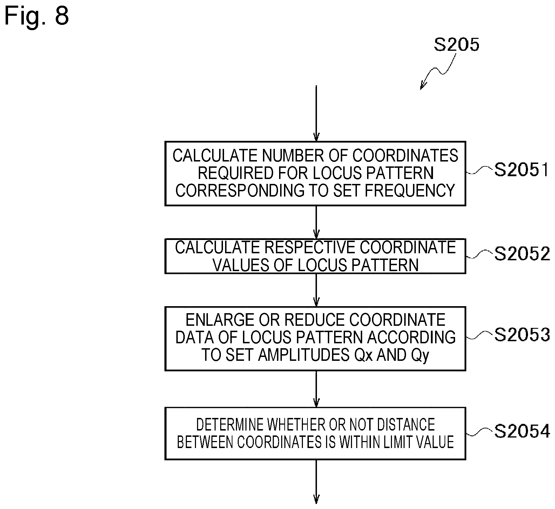

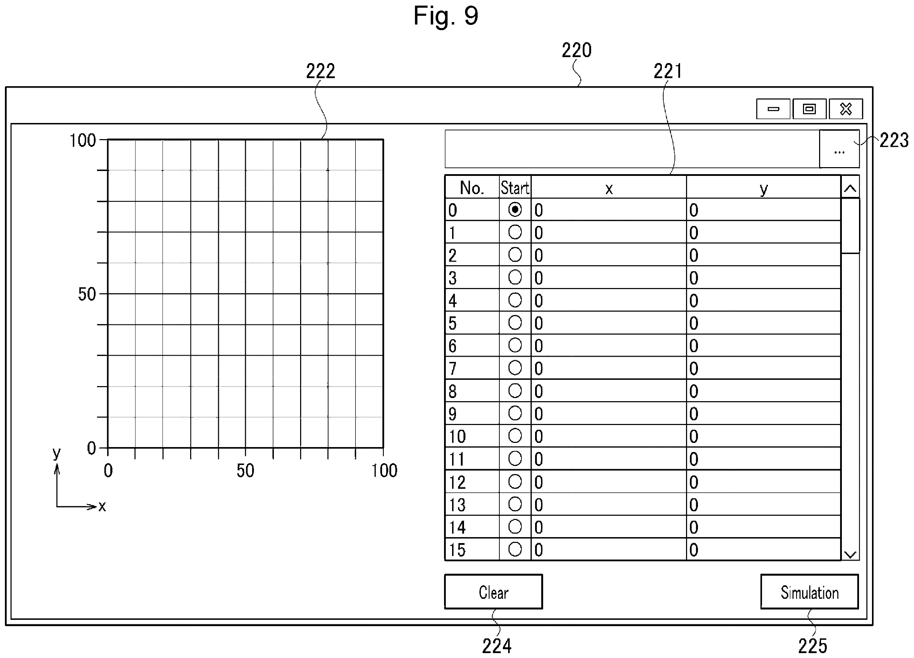

The flowcharts shown in Figures 7 and 8 show the processing executed by the coordinate pattern file creation device 200. When the CPU 211 executes the coordinate pattern file creation program, in step S201 of Figure 7, the CPU 211 displays, on the display unit 215, a coordinate value input window 220 shown in Figure 9. The coordinate value input window 220 corresponds to at least a part of the coordinate input unit 201.

The coordinate value input window 220 includes a coordinate value input field 221 for inputting a plurality of coordinate values (first plurality of coordinate values) constituting a coordinate pattern that is the original data for determining the locus pattern of one cycle, and a coordinate pattern display area 222 for displaying the coordinate pattern. The coordinate value input window 220 includes a read-out button 223 for reading out the coordinate pattern file stored in the coordinate pattern file database 75, a clear button 224, and a simulation instruction button 225.

The cutting travelling direction of the sheet metal W, which is the moving direction of the processing head 35, is defined as the x-axis direction, and the direction orthogonal to the x-axis direction in the surface of the sheet metal W is defined as the y-axis direction. The x-axis direction and the y-axis direction are determined depending on the moving direction in which the X-axis carriage 22 and the Y-axis carriage 23 move the processing head 35 along the surface of the sheet metal W in the X-axis direction, the Y-axis direction, or the direction in which the X-axis direction and the Y-axis direction are arbitrarily combined.

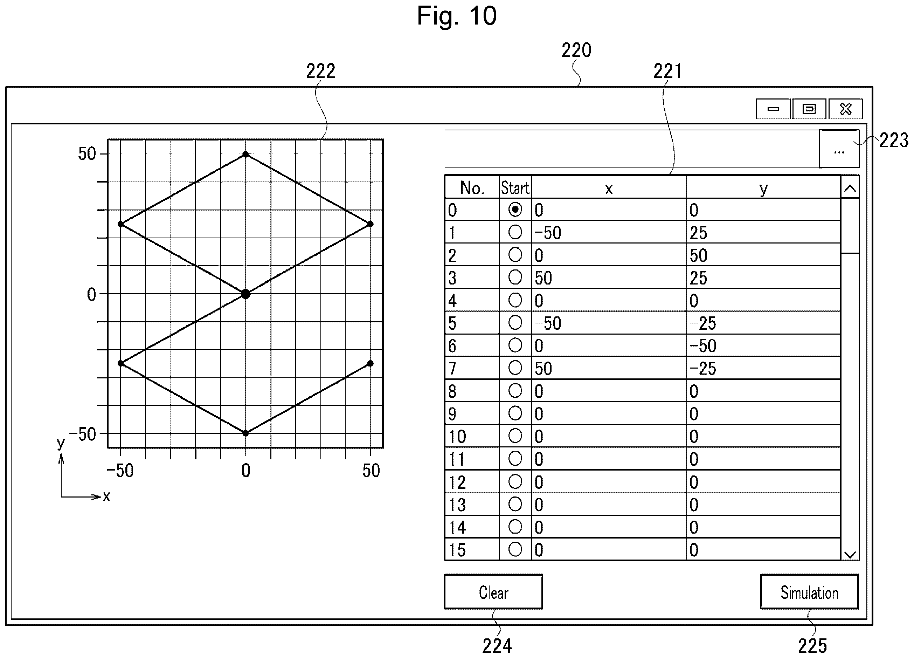

In step S202, an operator inputs, in the coordinate value input field 221, a plurality of coordinate values that constitutes the coordinate pattern. As shown in Figure 10, the operator inputs, in the fields of the numbers 1 to 7 of the coordinate value input field 221, (0, 0), (-50, 25), (0, 50), (50, 25), (0, 0), (-50, -25), (0, -50), and (50, -25), respectively, as the coordinate values of (x, y).

Then, in the coordinate pattern display area 222, the coordinate pattern corresponding to the plurality of coordinate values input in the coordinate value input field 221 is displayed. The coordinate value that is checked in the field indicated as Start in the coordinate value input field 221 is a start coordinate of the coordinate pattern.

Note that the operator understands in advance that the coordinate pattern for obtaining the 8-shaped vibration pattern shown in Figure 6 is the coordinate pattern shown in Figure 10. The display range of the coordinate pattern display area 222 in Figure 10 in the x-axis direction and the y-axis direction is different from the display range in Figure 9 in correspondence to the plurality of coordinate values input in the coordinate value input field 221.

In step S203, the CPU 211 determines whether or not an instruction for simulation has been given. If the instruction for simulation has not been given (NO), the processing of steps S202 and S203 are repeated. In Figure 10, when the operator presses the simulation instruction button 225 to give the instruction for simulation (YES), the CPU 211 (an interpolation parameter calculation unit 203) calculates in step S204 an interpolation parameter of cubic spline interpolation based on the input coordinate values.

The calculation method of the cubic spline interpolation includes various interpolation calculation formulae (interpolation methods) such as natural spline interpolation and Akima spline interpolation. In step S204, the interpolation formula to be used is selected.

The CPU 211 (the interpolation parameter calculation unit 203) calculates the interpolation parameters in the x-axis direction and the y-axis direction, respectively. The interpolation parameters are coefficients a, b, c, and d of piecewise polynomials $S_i(x)$ and $S_i(y)$ represented by the equations (1) and (2) that are used in the cubic spline interpolation. The piecewise polynomial $S_i(x)$ is a cubic polynomial that interpolates between a coordinate value $x_i$ and a coordinate value $x_{i+1}$ that are discrete points. Then, the piecewise polynomial $S_i(y)$ is a cubic polynomial that interpolates between a coordinate value yi and a coordinate value $y_{i+1}$ that are discrete points.

$$S_i(x) = a_i + b_i(x - x_i) + c_i(x - x_i)^2 + d_i(x - x_i)^3 \quad \ldots (1)$$

$$S_i(y) = a_i + b_i(y - y_i) + c_i(y - y_i)^2 + d_i(y - y_i)^3 \quad \ldots (2)$$

In actuality, in order to individually calculate the interpolation parameter of the x-axis and the interpolation parameter of the y-axis, the equations (3) and (4) using a parameter u are used. When the number of coordinate values is 7, the parameter u is from 0 to the number obtained by subtracting 1 from the number of coordinate values, that is, 0 to 6. At this time, the parameter u is the coordinate number value that is input in order, and by moving between the respective coordinate values in an equal time and completing the movement of one cycle, the interpolation calculation formulae of the coordinate value in the x-axis direction - the input coordinate number value (time) and the coordinate value in the y-axis direction - the input coordinate number value (time) are obtained.

$$x_i(u) = a_{x,\, i} + b_{x,\, i}u + c_{x,\, i}u^2 + d_{x,\, i}u^3 \quad \ldots (3)$$

$$y_i(u) = a_{y,\, i} + b_{y,\, i}u + c_{y,\, i}u^2 + d_{y,\, i}u^3 \quad \ldots (4)$$

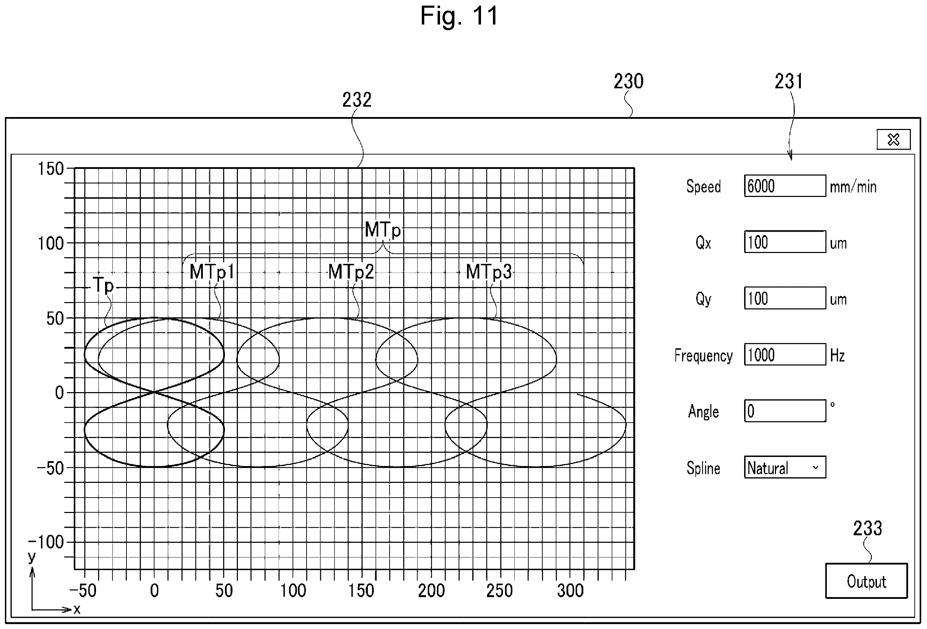

In step S205, the CPU 211 (the locus pattern calculation unit 204) creates a locus pattern based on the interpolation parameter, simulation conditions, and a control cycle of the galvano scanner unit 32. Subsequently, in step S206, the CPU 211 (the locus pattern calculation unit 204) creates a moving locus pattern in which the locus pattern is moved in the cutting travelling direction based on the simulation conditions. In step S206, the CPU 211 displays the locus pattern display window 230 shown in Figure 11 on the display unit 215.

The locus pattern display window 230 includes a condition input unit 231 for inputting the simulation conditions, a locus pattern display area 232 for displaying the locus pattern and the moving locus pattern, and an output instruction button 233 for instructing an output of the coordinate pattern file. The condition input unit 231 includes an input unit for a moving velocity of the processing head 35, which is indicated as Speed, an input unit for the amplitude of the locus pattern in the x-axis direction, which is indicated as Qx, and an input unit for the amplitude of the locus pattern in the y-axis direction, which is indicated as Qy. Further, the condition input unit 231 includes an input unit of a frequency at which the laser beam is vibrated, which is indicated as Frequency, a rotational angle at which the locus pattern is rotated, which is indicated as Angle, and a selection unit for the interpolation calculation formula, which is indicated as Spline.

In the selection unit of the interpolation calculation formula, the natural spline interpolation (Natural) and the Akima spline interpolation (Akima) can be selected. The interpolation calculation formula used in step S204 is selected in the selection unit of the interpolation calculation formula. The natural spline interpolation is used in step S204, and thus the natural spline interpolation is selected. In one or more embodiments, the interpolation calculation formula of the spline interpolation is used as an example of the interpolation calculation formula, but the interpolation calculation formula of any other interpolation method may be used as long as a predetermined interpolation calculation formula is used.

Specifically, the simulation conditions used in step S205 are the amplitudes Qx and Qy, the frequency, the rotational angle of the locus pattern, and the interpolation calculation formula that has been set in the condition input unit 231. Specifically, the simulation conditions used in step S206 are the moving velocity and the frequency of the processing head 35 that has been set in the condition input unit 231.

Figure 8 shows the detailed processing of step S205. In step S2051 of Figure 8, the CPU 211 (the locus pattern calculation unit 204) calculates the number of coordinates required to form the locus pattern corresponding to the frequency set in the frequency input unit of the condition input unit 231. The frequency is 1000 Hz, and the control cycle of the galvano scanner unit 32 is 1 $\mu$s. The cycle of the locus pattern is 1/1000 s = 1000 $\mu$s. In this case, the number of coordinates required for the locus pattern is 1000 $\mu$s/1 $\mu$s, which is 1000.

In step S2052, the CPU 211 (the locus pattern calculation unit 204) calculates a plurality of coordinate values (second plurality of coordinate values) that are interpolation points constituting the locus pattern. At this time, the CPU 211 (the locus pattern calculation unit 204) calculates the coordinate value of the locus pattern in the x-axis direction and the coordinate value thereof in the y-axis direction, respectively, by using the interpolation parameter of the x-axis and the interpolation parameter of the y-axis.

Specifically, the respective coordinate values are calculated as follows. The case is taken as an example in which the coordinate value of the input coordinate pattern is 25. The interpolation points to be interpolated by the cubic spline interpolation are 1000 coordinates of 0, 0.024, 0.048, 0.072, ... 23.928, 23.952, and 23.976 in each of the x-axis direction and the y-axis direction at 0.024 intervals, which is obtained by subtracting 1 from the input coordinate value and dividing the input coordinate number value by the number of coordinates of 1000. Each coordinate value of the locus pattern is determined by the coordinate value in the x-axis direction and the coordinate value in the y-axis direction having the coordinate values of the same interpolation point obtained by the interpolation point and the interpolation parameter.

For example, the coordinate value having the interpolation point 0 in the x-axis direction and the coordinate value having the interpolation point 0 in the y-axis direction determine the coordinate value of the first interpolation point, and the coordinate value having the interpolation point 0.024 in the x-axis direction and the coordinate value having the interpolation point 0.024 in the y-axis direction determines the coordinate value of the second interpolation point. After that, the same applies up to the coordinate value having the 1000th interpolation point.

In step S2053, the CPU 211 (the locus pattern calculation unit 204) enlarges or reduces coordinate data indicating the position of each coordinate of the locus pattern according to the amplitudes Qx and Qy. In step S2054, the CPU 211 (the locus pattern calculation unit 204) determines whether or not the distance between the coordinates is within the limit value. The distance between the coordinates changes according to the frequency and the amplitudes Qx and Qy. There is an upper limit to the angular velocity at which the scan mirrors 321 and 323 of the galvano scanner unit 32 change the angle. Even in a part of the locus pattern, if the distance between the coordinates exceeds the movable distance at the upper limit value of the angular velocity, the locus pattern cannot be drawn. Thus, such a locus pattern is unusable.

When the CPU 211 executes the processing of steps S204 to S206, as shown in Figure 11, a locus pattern Tp and a moving locus pattern MTp, in which the locus pattern Tp moves in the cutting travelling direction as the processing head 35 moves, are displayed in the locus pattern display area 232. The moving locus pattern MTp is determined by the frequency of the locus pattern Tp and the moving velocity of the processing head 35.

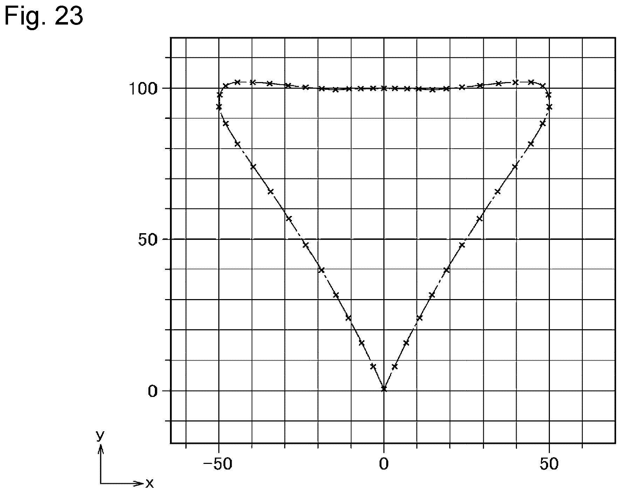

The locus pattern Tp and the moving locus pattern MTp are formed by points in a predetermined shape that indicate the coordinate values of the interpolation points in the same manner as in Figure 23, which will be described later. In Figures 11 to 19, 24, and 25, the locus pattern Tp and the moving locus pattern MTp are shown by curves that omit the points in a predetermined shape. It should be noted that only the points in a predetermined shape may be displayed, or between the adjacent points (in other words, between the coordinates) may be connected by a straight line or a curve. It is preferable to display the locus pattern Tp and the moving locus pattern MTp in different colors. Each cycle of the moving locus pattern MTp may be displayed in colors different from each other.

Here, locus patterns MTp1 to MTp3 of the first cycle to the third cycle are displayed. The locus pattern Tp and the moving locus pattern MTp shown in Figure 11 represent the case in which the moving velocity of the processing head 35 is 6000 mm/min, the amplitudes Qx and Qy are respectively 100 μm, the frequency is 1000 Hz, the rotational angle is 0 degrees, and the interpolation calculation formula is the natural spline interpolation.

Returning to Figure 7, the CPU 211 determines in step S207 whether or not an instruction to output the coordinate pattern file has been given. If the instruction to output the coordinate pattern file has not been given (NO), the CPU 211 (the locus pattern calculation unit 204) determines in step S208 whether or not any of the amplitude Qx, the amplitude Qy, the rotational angle, the interpolation calculation formula, and the frequency in the simulation conditions has been changed. If any of the amplitude Qx, the amplitude Qy, the rotational angle, the interpolation calculation formula, and the frequency has been changed (YES), the CPU 211 (the locus pattern calculation unit 204) returns the processing to step S205 to create a locus pattern based on the changed simulation condition.

If any of the amplitude Qx, the amplitude Qy, the rotational angle, the interpolation calculation formula, and the frequency has not been changed in step S208 (NO), the CPU 211 (the locus pattern calculation unit 204) determines in step S209 whether or not the moving velocity has been changed among the simulation conditions. If the moving velocity has been changed (YES), the CPU 211 (the locus pattern calculation unit 204) returns the processioning to step S206 to create a moving locus pattern MTp based on the changed moving velocity. If the moving velocity has not been changed (NO), the CPU 211 returns the processing to step S207.

If an instruction to create the coordinate pattern file is given in step S207 (YES), the CPU 211 (the coordinate pattern file creation unit 205) creates in step S210 a coordinate pattern file that is a single file including coordinate pattern data indicating the coordinate pattern composed of a plurality of coordinate values input in the coordinate value input field 221, the rotational angle set in the condition input unit 231, and an identification value indicating the selected interpolation calculation formula, and ends the processing.

When the rotational angle is limited to 0 degrees, the coordinate pattern file may be a single file that includes the coordinate pattern data and the identification value of the interpolation calculation formula. When the interpolation calculation formula is limited to one of the natural spline interpolation or the Akima spline interpolation, the coordinate pattern file may be a single file that includes the coordinate pattern data and the rotational angle. When the rotational angle is limited to 0 degrees and the interpolation calculation formula is limited to one, the coordinate pattern file may be a single file that includes only the coordinate pattern data.

The coordinate pattern file created by the CPU 211 (the coordinate pattern file creation unit 205) is transmitted to and stored in the coordinate pattern file database 75 by the network connection unit 214 at an arbitrary timing.

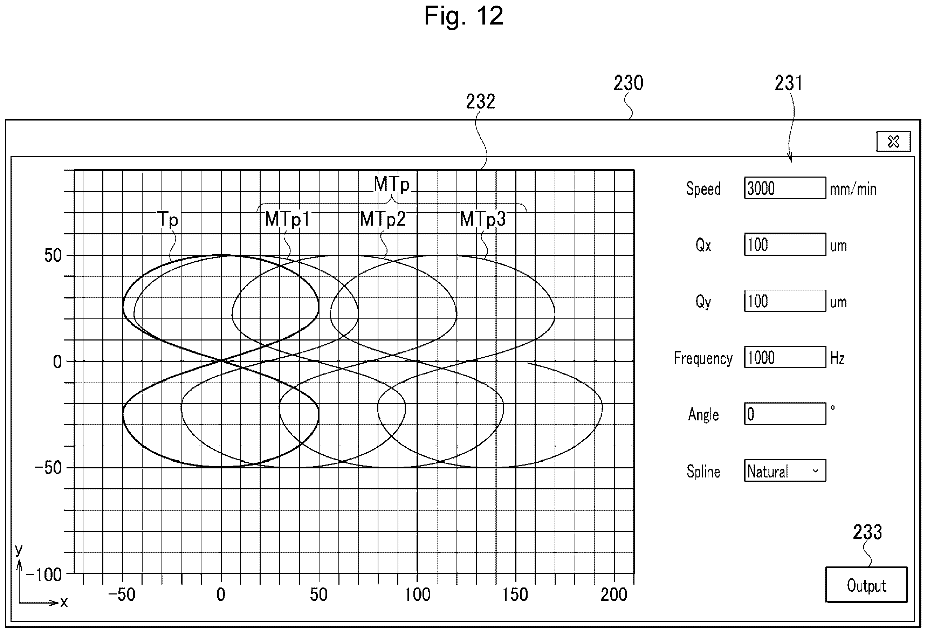

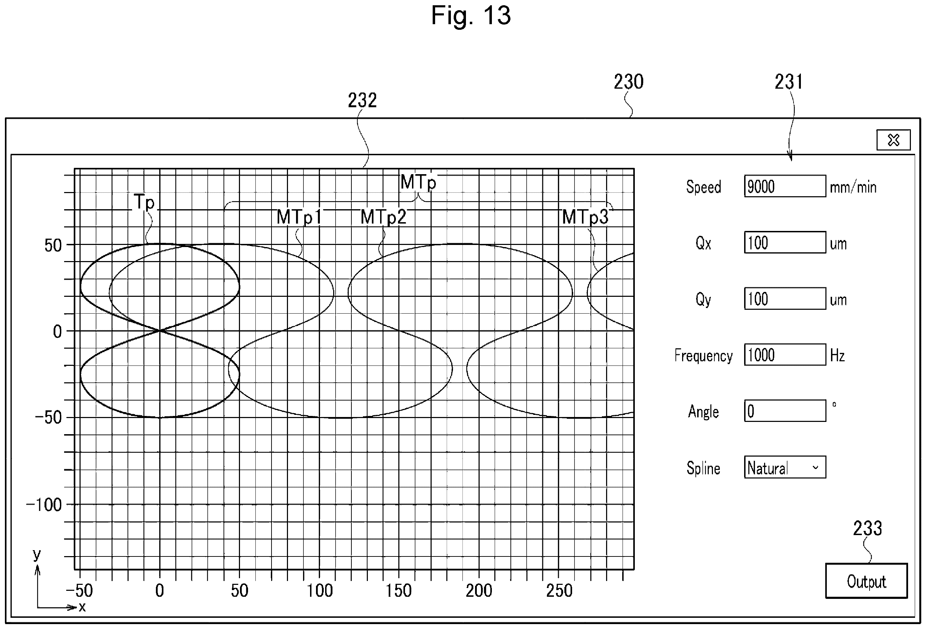

Figure 12 shows the locus pattern display window 230 when the moving velocity of the processing head 35 is changed to 3000 mm/min, which is half of 6000 mm/min in Figure 11. It can be seen that the overlap amount between the respective cycles of the moving locus pattern MTp is increased due to the reduced moving velocity of the processing head 35. Figure 13 shows the locus pattern display window 230 when the moving velocity of the processing head 35 is changed to 9000 mm/min. It can be seen that the overlap amount between the respective cycles of the moving locus pattern MTp is reduced due to the increased moving velocity of the processing head 35.

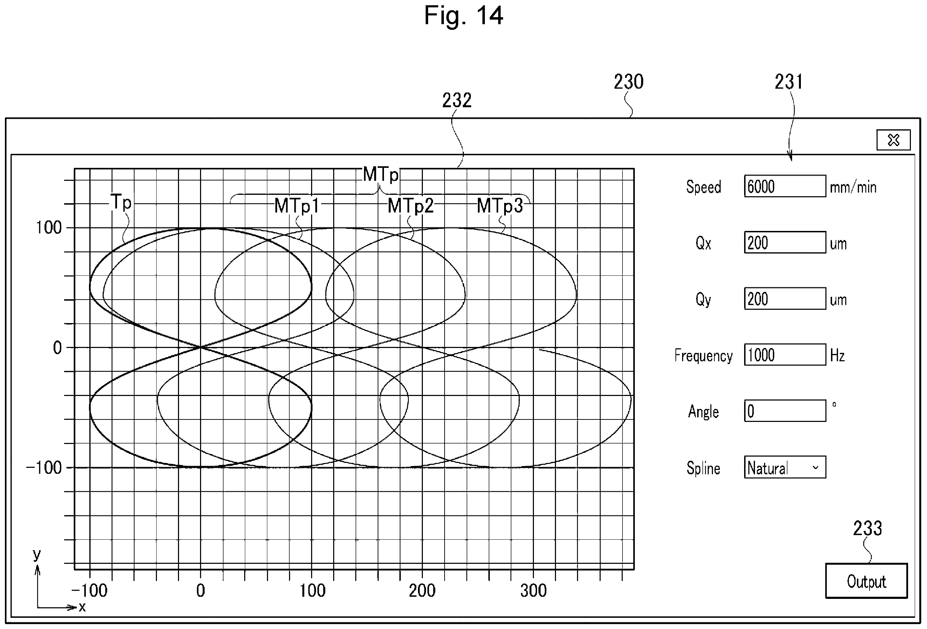

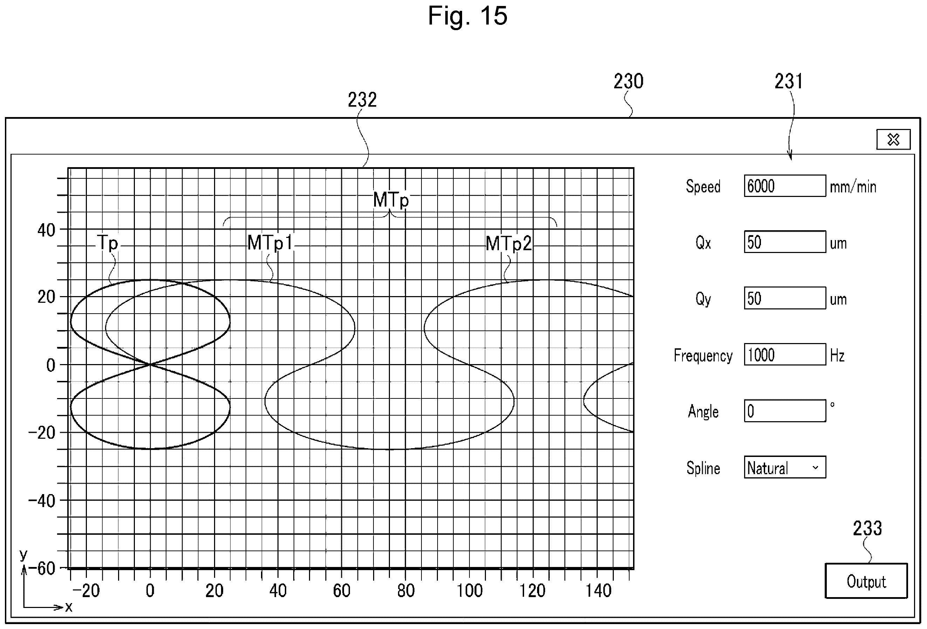

Figure 14 shows the locus pattern display window 230 when the amplitudes Qx and Qy are respectively changed to 200 μm while the moving velocity is kept at 6000 mm/min. Figure 15 shows the locus pattern display window 230 when the amplitudes Qx and Qy are respectively changed to 50 μm while the moving velocity is kept at 6000 mm/min.

When the amplitudes Qx and Qy are changed, the overlap amount between the respective cycles is increased or reduced as the amplitudes of the locus patterns in the x-axis direction and the y-axis direction are changed.

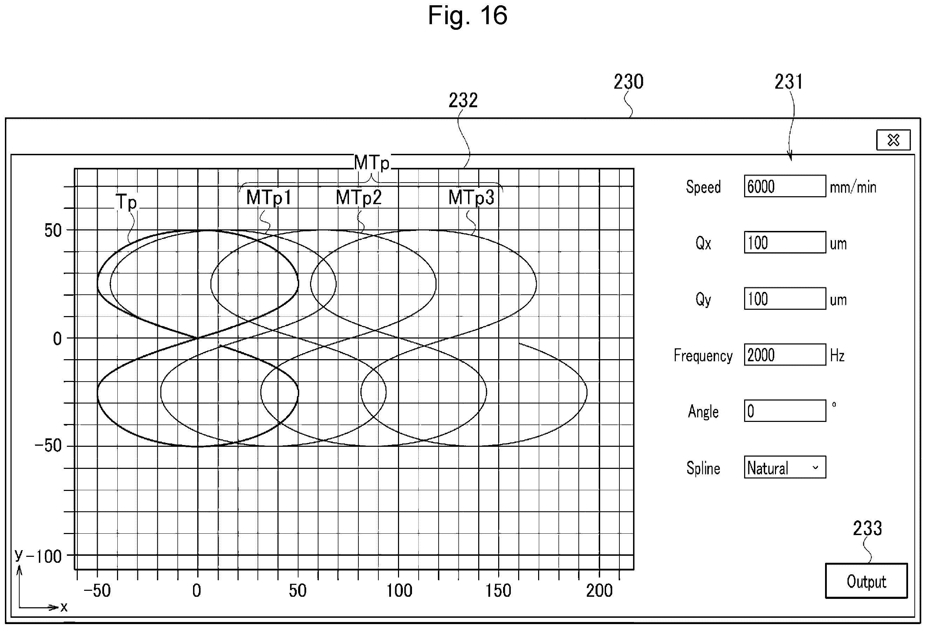

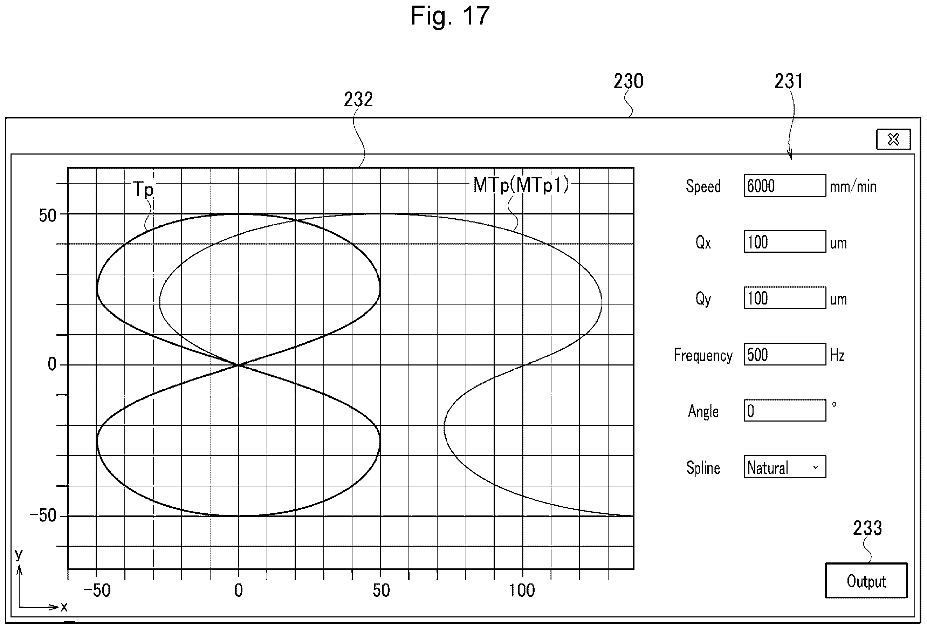

Figure 16 shows the locus pattern display window 230 when the frequency is changed to 2000 Hz, which is twice as high as 1000 Hz in Figure 11, while the moving velocity is kept at 6000 mm/min. Figure 17 shows the locus pattern display window 230 when the frequency is changed to 500 Hz, which is half of 1000 Hz in Figure 11, while the moving velocity is kept at 6000 mm/min. When the frequency is changed, the overlap amount between the respective cycles is increased or reduced.

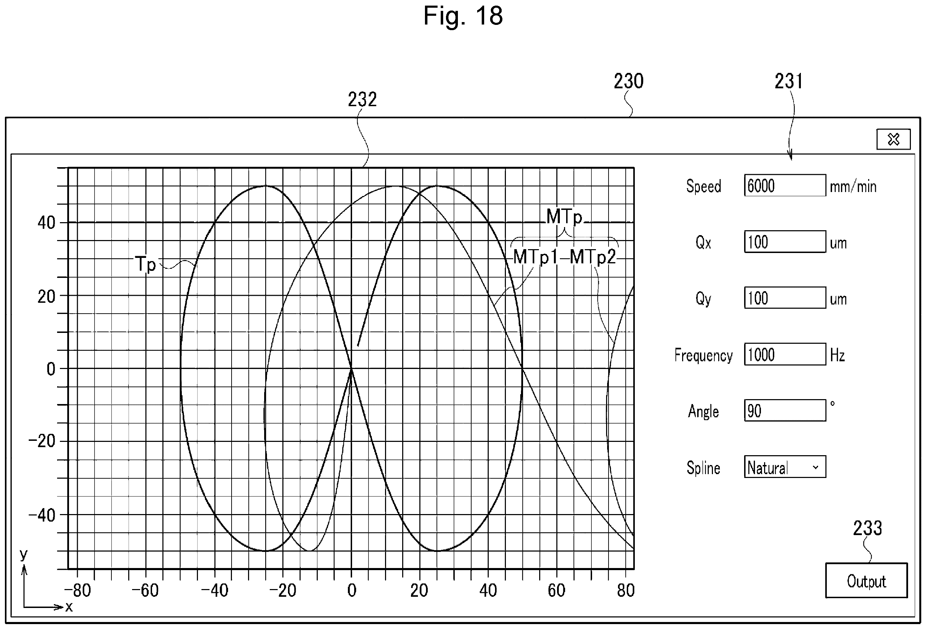

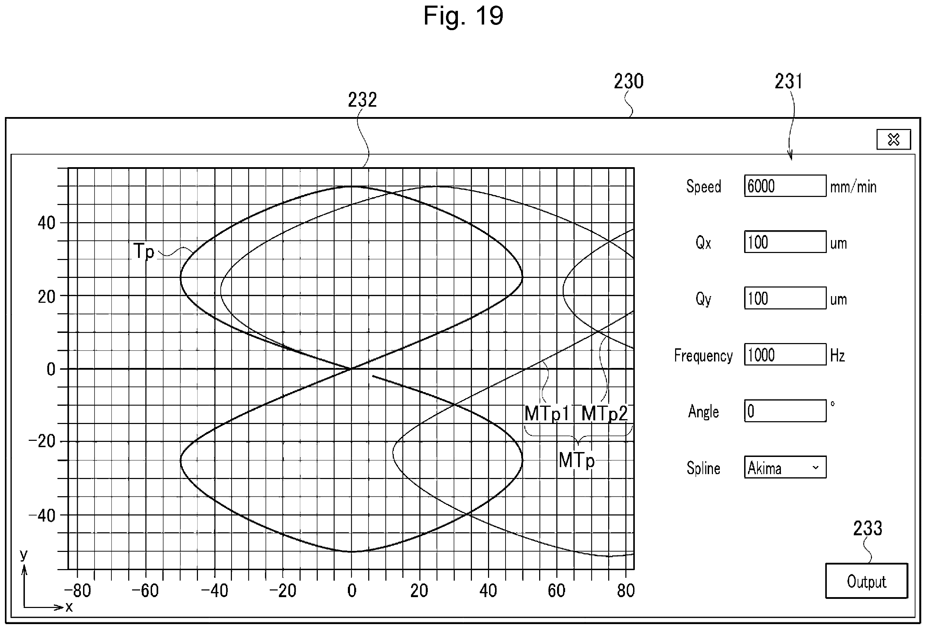

Figure 18 shows the locus pattern display window 230 when the rotational angle is changed to 90 degrees under the simulation conditions of Figure 11. Figure 19 shows the locus pattern display window 230 when the interpolation calculation formula is changed to the Akima spline interpolation under the simulation conditions of Figure 11. When the interpolation calculation formula is changed from the natural spline interpolation to the Akima spline interpolation, the shape of the locus pattern Tp is changed, and the shape of the moving locus pattern MTp is changed accordingly.

As shown in Figures 11 to 19, the operator can appropriately modify the simulation conditions, confirm the shape of the locus pattern Tp or the shape of the moving locus pattern MTp, and select the optimum locus pattern Tp or moving locus pattern MTp. The operator can create the coordinate pattern file after determining the optimum locus pattern Tp or moving locus pattern MTp.

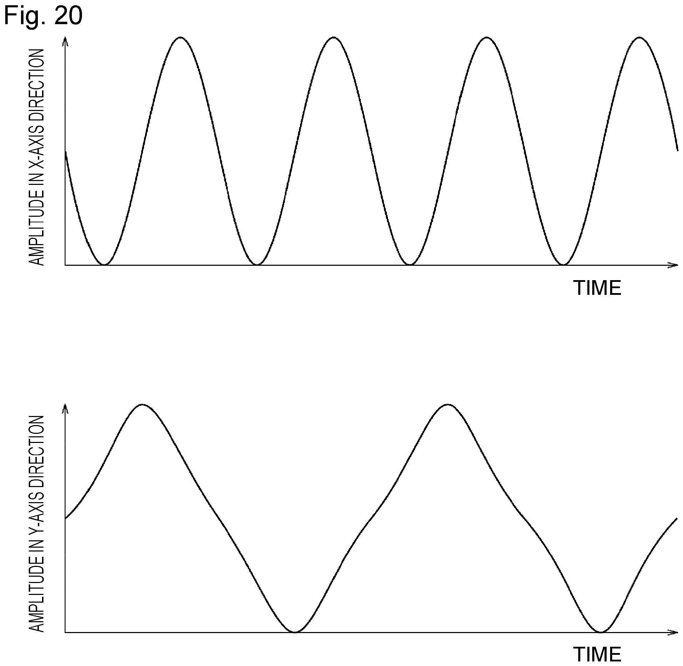

Figure 20 shows the amplitude changes in the x-axis direction and the y-axis direction according to the 8-shaped vibration pattern shown in Figure 6. As shown in Figure 20, it can be seen that the 8-shaped vibration pattern shown in Figure 6 is a locus pattern that vibrates in a sine wave shape in the x-axis direction and vibrates in a waveform shape other than the sine wave in the y-axis direction. The coordinate pattern file creation device 200 can also simulate the sine wave 8-shaped vibration pattern in both of the x-axis direction and the y-axis direction.

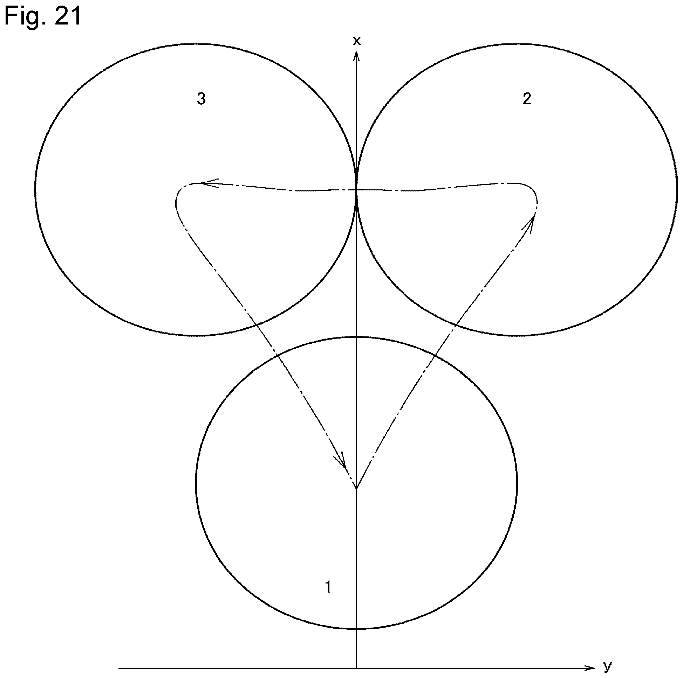

Taking a substantially triangular locus pattern shown in Figure 21 as an example, the coordinate values input to the coordinate value input window 220, and the locus pattern Tp and the moving locus pattern MTp displayed on the locus pattern display window 230 will be described. In Figure 21, the beam spots represented by circles vibrate in such a manner as to move in the order indicated by the numbers in the beam spots. The beam spot at the position indicated by the number 3 moves to the position indicated by the number 1 and repeats vibrating. In the same manner as in Figure 6, the locus pattern shown in Figure 21 is a pattern drawn only by the galvano scanner unit 32 vibrating the beam spot while the processing head 35 is not moving.

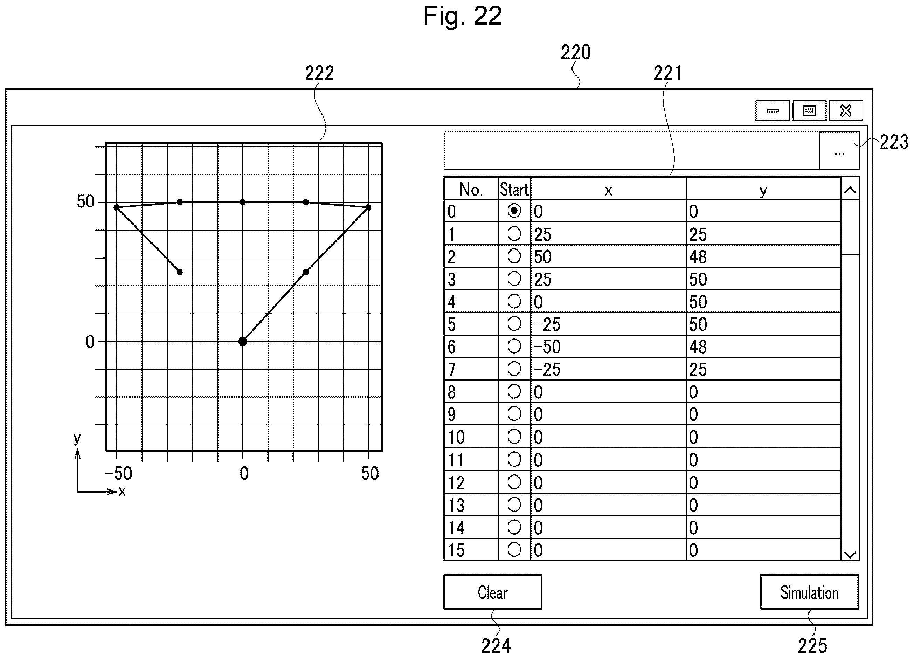

As shown in Figure 22, the operator inputs, in the fields of the numbers 1 to 7 of the coordinate value input field 221, (0, 0), (25, 25), (50, 48), (25,50), (0,50), (-25,50), (-50, -48), and (-25,25), respectively as the coordinate values of (x, y). Then, in the coordinate pattern display area 222, the coordinate pattern corresponding to the plurality of coordinate values input in the coordinate value input field 221 is displayed. The operator understands in advance that the coordinate pattern for obtaining the substantially triangular locus pattern shown in Figure 21 is the coordinate pattern shown in Figure 22.

Figure 23 shows a locus pattern drawn by the locus pattern simulation unit 202 based on the coordinate pattern shown in Figure 22. The locus pattern is represented by points indicated by x each indicating the coordinate value of the interpolation point. Since the coordinates of the parts drawn by the coordinate values (50,48), (25,50), (0,50), (-25,50), and (-50, -48) have short distances between the adjacent coordinates, the amount of heat generated by the laser beam can be concentrated.

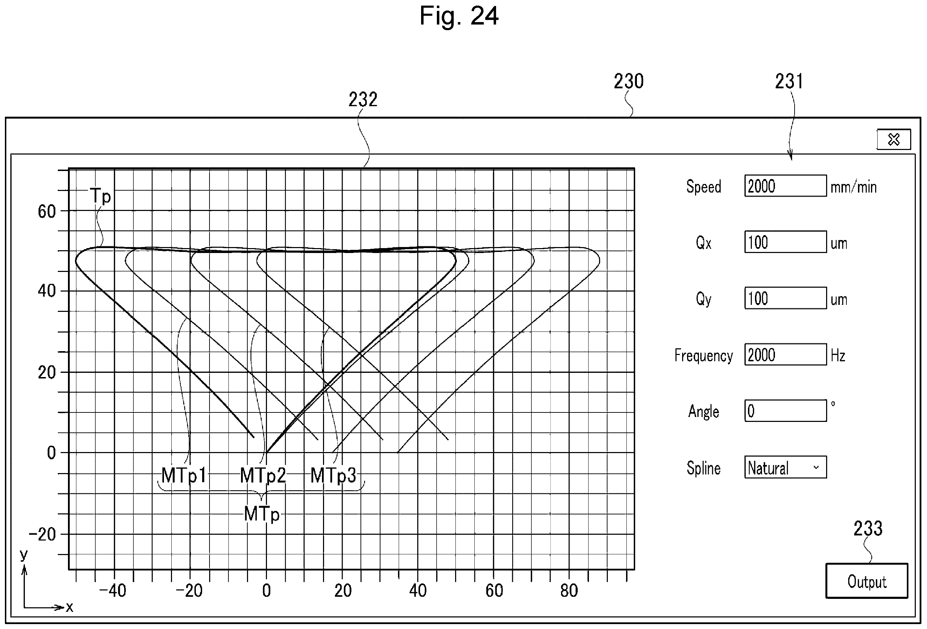

Figure 24 shows the locus pattern Tp and the moving locus pattern MTp displayed in the locus pattern display area 232 when the moving velocity of the processing head 35 is 2000 mm/min, the amplitudes Qx and Qy are respectively 100 $\mu$m, the frequency is 2000 Hz, the rotational angle is 0 degrees, and the interpolation calculation formula is the natural spline interpolation. When the coordinate pattern shown in Figure 22 is used, it is possible to cut the sheet metal W by concentrating the amount of heat on one end portion of the locus pattern Tp in the y-axis direction.

Also in Figure 24, the shape of the locus pattern Tp or the moving locus pattern MTp can be changed by changing at least one of the moving velocity, the amplitudes Qx and Qy, the frequency, the rotational angle, and the interpolation calculation formula of the processing head 35.

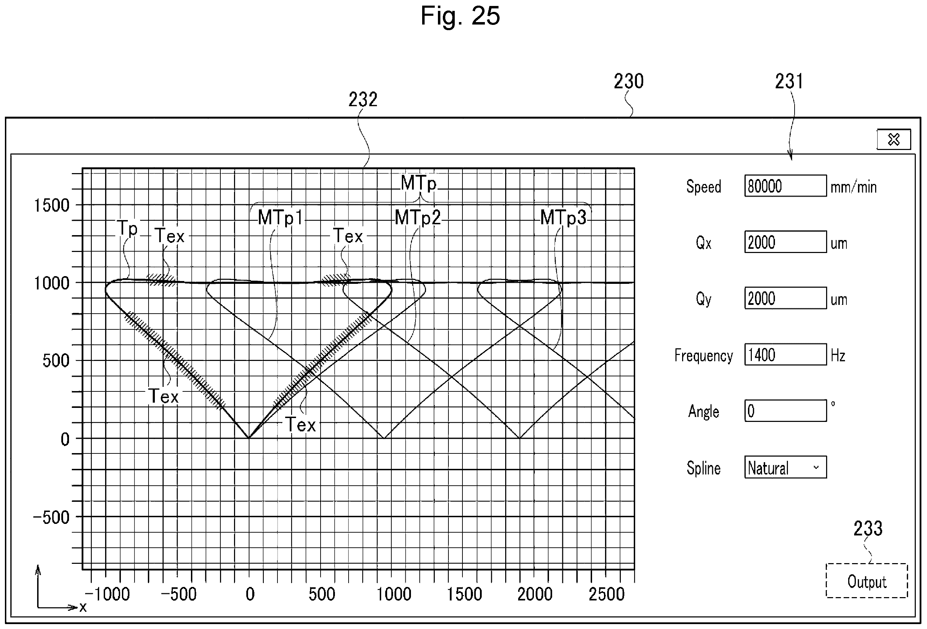

Figure 25 shows the locus pattern Tp and the moving locus pattern MTp displayed in the locus pattern display area 232 when it is determined in step S2054 that the distance between the coordinates is not within the limit value. As shown in Figure 25, for example, when the moving velocity of the processing head 35 is set to 8000 mm/min, the amplitudes Qx and Qy thereof are respectively set to 2000 $\mu$m, and the frequency thereof is set to 1400 Hz, the distance between the coordinates partially exceeds the movable distance at the upper limit of the angular velocity, which is the limit value. In such a case, if the locus pattern Tp is displayed in black, the CPU 211 preferably displays a limit excess part Tex of the locus pattern Tp in red, for example. In Figure 25, the limit excess part Tex is hatched.

The limit excess part Tex displayed in red indicates that the locus pattern Tp is unusable. The fact that the locus pattern Tp is unusable may be indicated by a text or a graphic. It is preferable to disable the output of the coordinate pattern file by deactivating the output instruction button 233 when the limit excess part Tex exists at least partially.

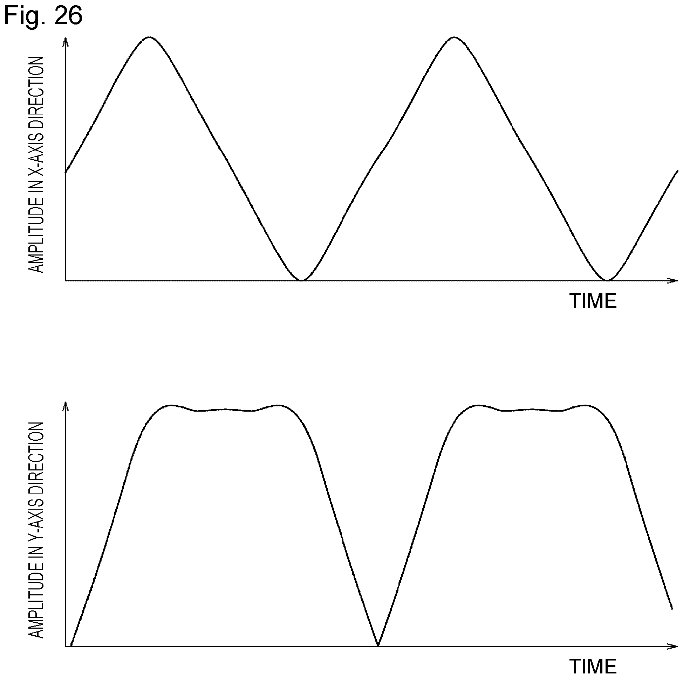

Figure 26 shows the amplitude changes in the x-axis direction and the y-axis direction according to the locus pattern shown in Figure 23. As shown in Figure 26, it can be seen that the locus pattern shown in Figure 23 is a locus pattern that vibrates in a waveform shape other than a sine wave in both the x-axis direction and the y-axis direction.

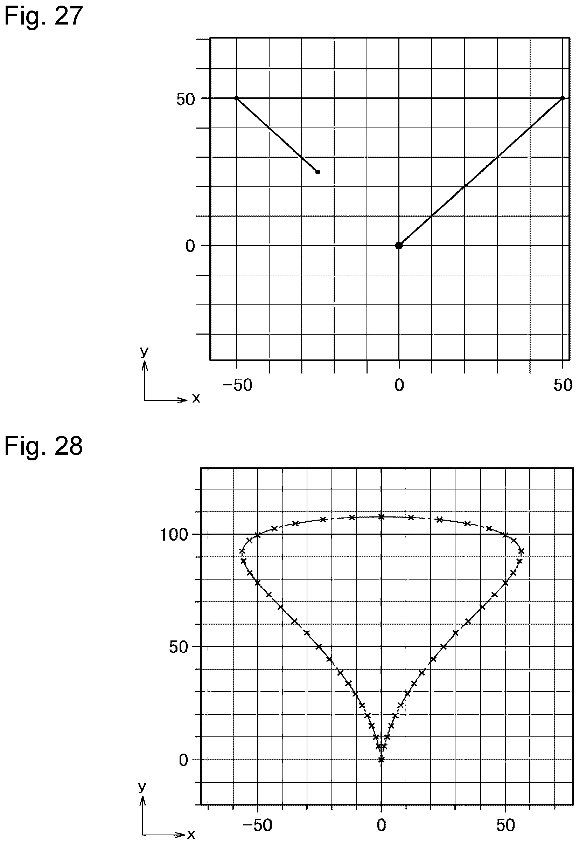

If the coordinate pattern shown in Figure 27, which is obtained by thinning out the coordinate values between the coordinate values (50, 48) and (-50, -48) in Figure 22, is used instead of the coordinate pattern shown in Figure 22, the locus pattern shown in Figure 28 in which the distance between the drawn coordinates becomes longer can be obtained. The locus pattern shown in Figure 28 is different from the locus pattern shown in Figure 23, and is a locus pattern in which the concentration of the amount of heat by the laser beam is suppressed.

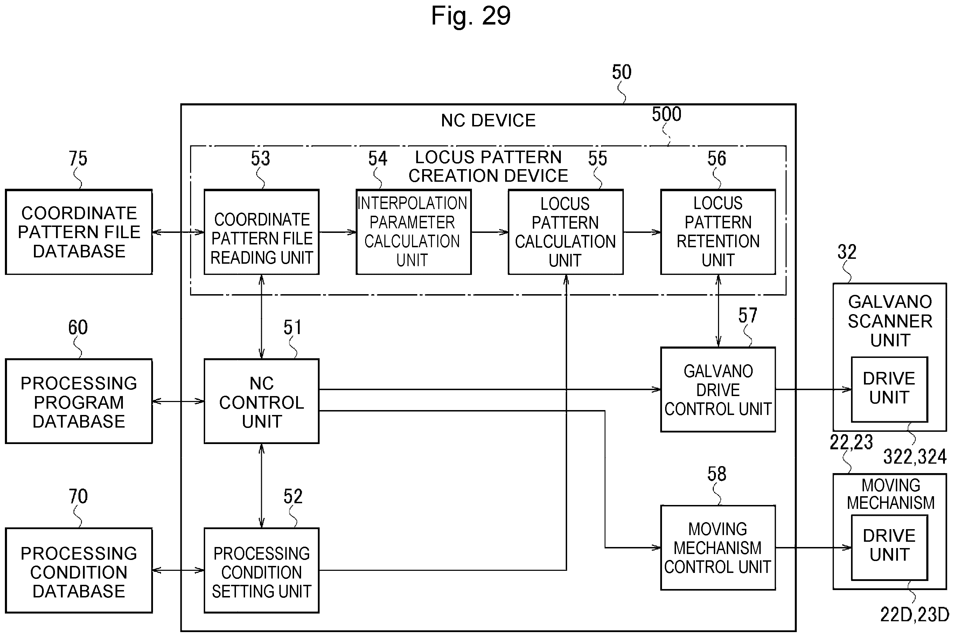

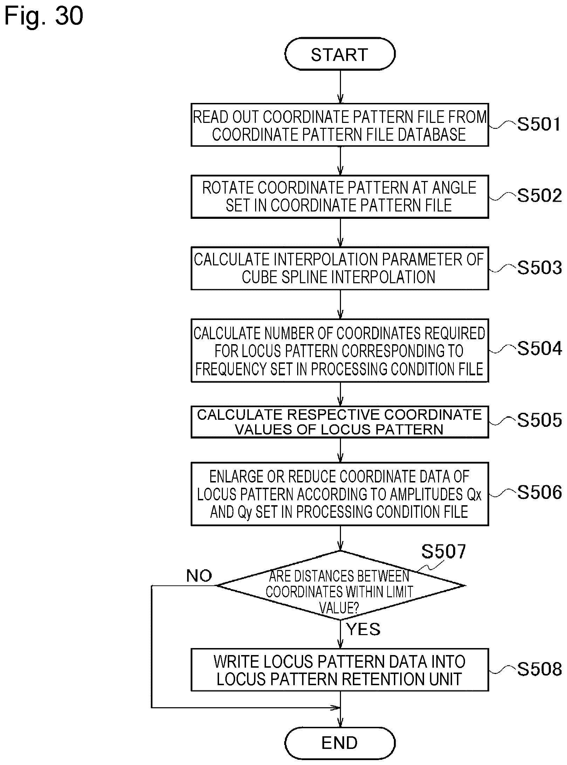

Next, the locus pattern creation device and the method of controlling the laser processing machine of one or more embodiments will be described with reference to Figures 29 and 30. As shown in Figure 29, the NC device 50 includes an NC control unit 51, a processing condition setting unit 52, a coordinate pattern file reading unit 53, an interpolation parameter calculation unit 54, a locus pattern calculation unit 55, a locus pattern retention unit 56, a galvano drive control unit 57, and a moving mechanism control unit 58. The coordinate pattern file reading unit 53 to the locus pattern retention unit 56 constitute the locus pattern creation device 500. The locus pattern retention unit 56 is composed of a storage unit for transitory storage.

The NC control unit 51 reads out, from the processing program database 60, a processing program for processing the sheet metal W to be processed. The processing condition setting unit 52 reads out, from the processing condition database 70, the processing conditions when the sheet metal W is processed. The moving velocity of the processing head 35, a laser output of the laser oscillator 10, an assist gas pressure, the frequency when the laser beam is vibrated by the galvano scanner unit 32, the amplitudes Qx and Qy, and the like are set to the processing conditions. The processing conditions may be selected by the operation unit 40, or may be automatically selected according to material conditions (material and thickness) of the sheet metal W. The read-out processing conditions are supplied to the NC control unit 51.

The coordinate pattern file reading unit 53 reads out the coordinate pattern file from the coordinate pattern file database 75. If the locus pattern for vibrating the laser beam is set in the processing program, the coordinate pattern file reading unit 53 reads out the coordinate pattern file for obtaining the set locus pattern based on the processing program read out by the NC control unit 51. The coordinate pattern file includes coordinate pattern data including at least the first plurality of coordinate values.

The interpolation parameter calculation unit 54 calculates the interpolation parameters of the cubic spline interpolation based on the coordinate pattern included in the read-out coordinate pattern file, the rotational angle, and the identification value of the interpolation calculation formula. Assuming that the rotational angle is $\theta$, the interpolation parameter calculation unit 54 rotates each coordinate value x and y of the coordinate pattern according to the following equations (5) and (6), where the coordinate values x and y after rotation is coordinate values x' and y'.

$$x' = x\cos\theta - y\sin\theta \quad \ldots (5)$$

$$y' = x\sin\theta + y\cos\theta \quad \ldots (6)$$

The calculation method of the interpolation parameter of the cubic spline interpolation in the interpolation parameter calculation unit 54 is the same as the calculation method in the interpolation parameter calculation unit 203 described above.

The locus pattern calculation unit 55 calculates the number of coordinates required for the locus pattern according to the frequency set in the processing conditions, and determines the plurality of coordinate values (the second plurality of coordinate values) that are interpolation points. The locus pattern calculation unit 55 enlarges or reduces the coordinate data, which indicates each coordinate value of the locus pattern, according to the amplitudes Qx and Qy set in the processing conditions. The locus pattern calculation unit 55 determines whether or not the distance between the coordinates is within the limit value. If the distance between the coordinates is within the limit value, the locus pattern data is retained in the locus pattern retention unit 56. The locus pattern data consists of coordinate values on the x-axis and the y-axis that constitute the locus pattern.

The galvano drive control unit 57 controls the drive units 322 and 324 of the galvano scanner unit 32 so as to vibrate the laser beam based on the locus pattern data retained in the locus pattern retention unit 56. The moving mechanisms (hereinafter, the moving mechanisms 22 and 23) respectively consisting of the X-axis carriage 22 and the Y-axis carriage 23 include drive units 22D and 23D that drive the moving mechanisms 22 and 23, respectively. The moving mechanism control unit 58 controls the drive units 22D and 23D based on a processing command set in the processing program so as to move the processing head 35. At this time, the moving mechanism control unit 58 moves the processing head 35 at the moving velocity set in the processing program.

As a result, the beam spot of the laser beam with which the sheet metal W is irradiated moves in the cutting travelling direction while vibrating in the locus pattern Tp and the moving locus pattern MTp that is determined by the moving velocity and the frequency of the processing head 35, and the sheet metal W is cut.

In Figure 29, the configuration inside the NC device 50 that controls the laser oscillator 10 and the assist gas supply device 80 is omitted. The NC device 50 controls the laser oscillator 10 such that the laser output is the one set in the processing conditions, and controls the assist gas supply device 80 such that the assist gas pressure is the one set in the processing conditions.

By using the flowchart shown in Figure 30, the processing executed by the locus pattern creation device 500 will be described again. When the processing is started, the locus pattern creation device 500 reads out the coordinate pattern file from the coordinate pattern file database 75 in step S501. In step S502, the locus pattern creation device 500 rotates the coordinate pattern at the rotational angle set in the coordinate pattern file. In step S503, the locus pattern creation device 500 calculates the interpolation parameter of the cubic spline interpolation that uses the interpolation calculation formula set in the coordinate pattern file.

In step S504, the locus pattern creation device 500 calculates the number of coordinates required for the locus pattern corresponding to the frequency set in the processing conditions. In step S505, the locus pattern creation device 500 calculates each coordinate value of the locus pattern. In step S506, the locus pattern creation device 500 enlarges or reduces the coordinate data, which consists of each coordinate value of the locus pattern, according to the amplitudes Qx and Qy set in the processing conditions.

In step S507, the locus pattern creation device 500 determines whether or not the distances between the coordinates are within the limit value at all the positions of the locus pattern. If the distances between the coordinates are within the limit value at all the positions of the locus pattern (YES), the locus pattern creation device 500 writes the locus pattern data into the locus pattern retention unit 56 in step S508, and ends the processing. If the distances between the coordinates are not within the limit value at least in part (NO), the locus pattern creation device 500 ends the processing without writing the locus pattern data into the locus pattern retention unit 56.

The locus pattern retention unit 56 is configured so as not to retain the unusable locus pattern data in which the distances between the coordinates exceed the limit value at least in part. Therefore, it is possible to prevent a processing failure of the sheet metal W. When the distances between the coordinates are not within the limit value, the NC device 50 may display, on the display unit 90, error information indicating that the sheet metal W cannot be processed by using the selected locus pattern.

The method of controlling the laser processing machine 100 of one or more embodiments controls the moving mechanisms 22 and 23 so as to move the processing head 35 at the moving velocity set in the processing conditions, and controls the galvano scanner unit 32 so as to vibrate the laser beam based on the locus pattern data stored in the locus pattern retention unit 56.

At least, the interpolation parameter calculation unit 54 and the locus pattern calculation unit 55 in the locus pattern creation device 500 may be configured by the NC device 50 executing the computer program (the locus pattern creation program).

Now, in the one or more embodiments described above, the locus pattern display window 230 that displays the moving locus pattern MTp when the laser processing machine 100 processes the sheet metal W while moving the processing head 35 is illustrated. When the laser processing machine 100 processes the sheet metal W without moving the processing head 35, only the locus pattern Tp is displayed on the locus pattern display window 230.

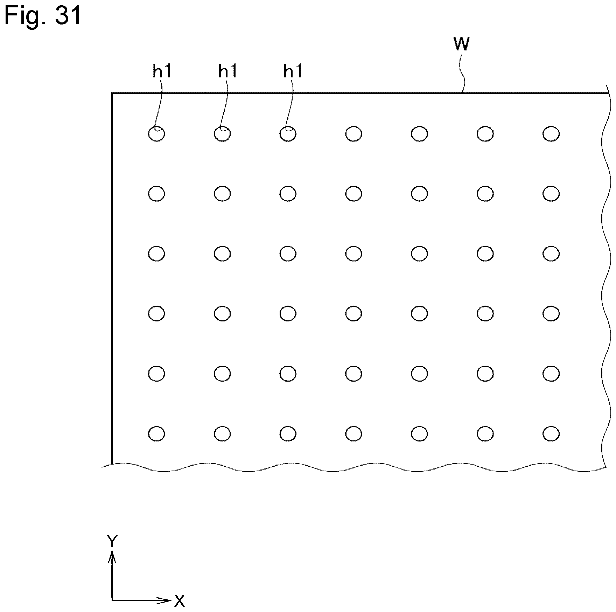

As shown in Figure 31, the locus pattern display window 230 that displays only the locus pattern Tp will be described by taking the case, in which the laser processing machine 100 forms a plurality of holes h1 in the sheet metal W, as an example. In Figure 31, it is assumed that the diameter of the hole h1 is 1 mm, and the pitch of the plurality of holes h1 is 5 mm in the X-axis direction and the Y-axis direction.

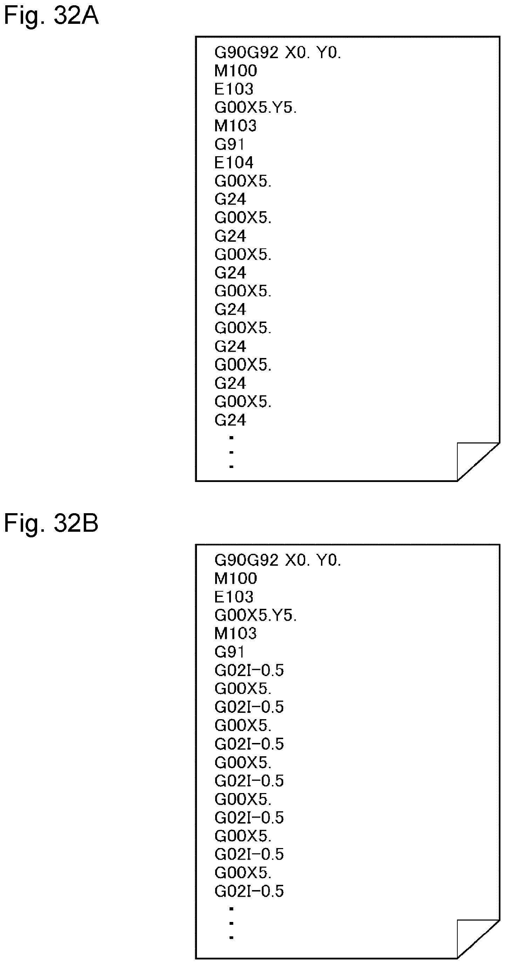

Figure 32A partially shows an example of the processing program in which the NC device 50 controls the laser processing machine 100 so as to process the sheet metal W as shown in Figure 31 in one or more embodiments. For comparison, Figure 32B partially shows an example of a conventional processing program in which the NC device 50 controls the laser processing machine 100 so as to process the sheet metal W as shown in Figure 31.

First, the conventional processing program shown in Figure 32B will be described. G90 of the G code means an absolute coordinate command, and G92 means a coordinate system setting. G90G92 X0. Y0. on the first line of the processing program shown in Figure 32B means to command (0,0) as the absolute coordinate of (X, Y). E103 on the third line indicates a pierced hole code command. G00 indicates a positioning command, and G00X5. Y5. on the fourth line means to position (X, Y) at coordinates (5, 5). M103 on the fifth line indicates a head lowering / a beam-on / the pierced hole command. G91 on the sixth line indicates a relative coordinate command (an incremental command).

G02 in G02I-0.5 on the seventh line indicates a circular interpolation command, and G02I-0.5 indicates a command to turn on the beam and draw a locus of a circle having a radius of 0.5 mm. In other words, G02I-0.5 means a command to form the circle having a radius of 0.5 mm on the sheet metal W while moving the processing head 35. G00X5 on the 8th line means that the processing head 35 is moved by 5 mm in the X-axis direction because the relative coordinate command is given at G91 on the sixth line. Therefore, from the 7th line onward, the G codes mean to repeat the cutting of the sheet metal W that draws the circle having a radius of 0.5 mm while moving the processing head 35 at a certain position, and the moving of the processing head 35 by 5 mm in the x-axis direction.

The laser processing machine 100 moves the processing head 35 by 5 mm in the X-axis direction while moving the processing head 35 by 5 mm in the Y-axis direction, and irradiates the sheet metal W with the laser beam while moving the processing head 35 so as to form the circle having a radius of 0.5 mm at each position. When the laser processing machine 100 processes the sheet metal W in this manner, the plurality of holes h1 can be formed in the sheet metal W as shown in Figure 31.

When the NC device 50 controls the laser processing machine 100 by using the conventional processing program shown in Figure 32B to form the plurality of holes h1 in the sheet metal W as shown in Figure 31, the processing time is significantly long. Therefore, it is required to shorten the processing time.

In the one or more embodiments, in order to make the processing time shorter than before when the plurality of holes h1 are formed in the sheet metal W, the NC device 50 controls the laser processing machine 100 using the processing program shown in Figure 32A.

In Figure 32A, E104 indicates the pierced hole code command and G24 indicates a beam-on pierced hole command. The processing program shown in Figure 32A means repeating a command to turn on the beam for opening the pierced hole at a certain position and a movement of the processing head 35 by 5 mm in the X-axis direction. In other words, the processing program shown in Figure 32A does not include a command to move the processing head 35 during cutting of the sheet metal W.

At this time, if the NC device 50 controls the galvano scanner unit 32 so as to vibrate the laser beam in a circular shape, the plurality of holes h1 can be formed in the sheet metal W. When the hole h1 is formed in the sheet metal W, the laser processing machine 100 does not move the processing head 35 but vibrates the laser beam in a circular vibration pattern. The operator can confirm the locus pattern Tp in advance by displaying the locus pattern Tp for forming the holes h1 in the sheet metal W on the locus pattern display window 230 by means of the coordinate pattern file creation device 200.

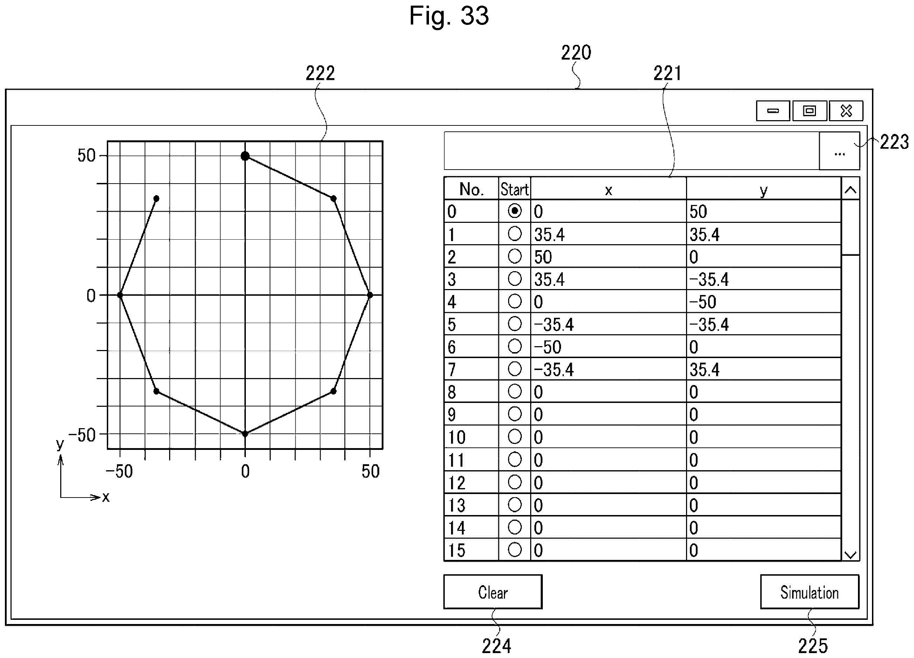

As shown in Figure 33, the operator inputs, with the coordinate input unit 201, a plurality of coordinate values constituting the coordinate pattern for obtaining a circular vibration pattern in the coordinate value input field 221 of the coordinate value input window 220. The operator inputs, in the fields of the numbers 1 to 7 of the coordinate value input field 221, (0, 50), (35.4, 35.4), (50, 0), (35.4, -35.4), (0, -50), (-35.4, -35.4), (-50, 0), and (-35.4, 35.4) respectively as the coordinate values of (x, y). Then, the coordinate pattern corresponding to the plurality of coordinate values input in the coordinate value input field 221 is displayed in the coordinate pattern display area 222.

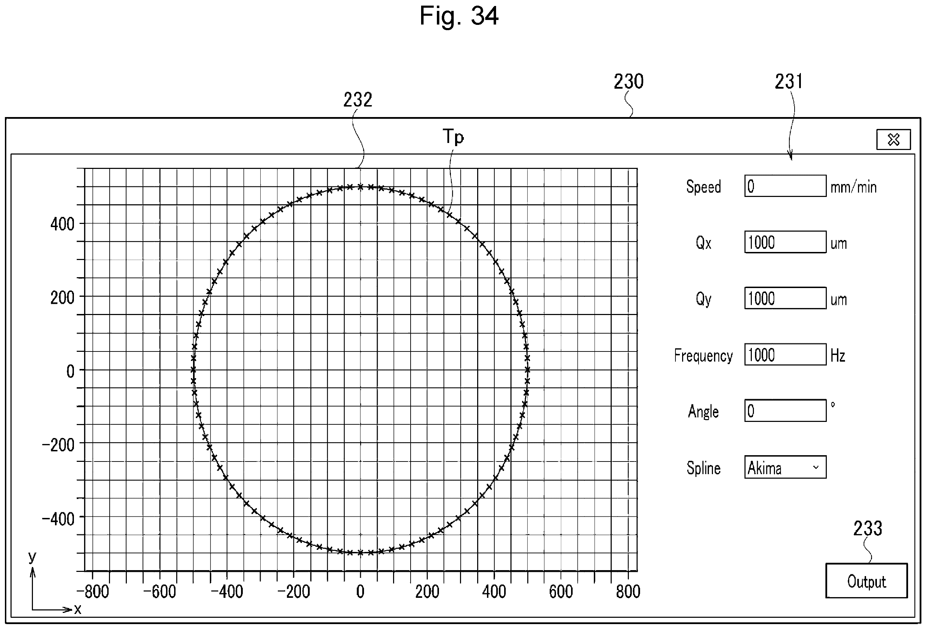

As shown in Figure 34, the locus pattern simulation unit 202 displays, in the locus pattern display area 232 of the locus pattern display window 230, the locus pattern Tp based on the coordinate pattern of Figure 33. The locus pattern Tp shown in Figure 34 is a locus pattern Tp corresponding to the shape of the hole h1. As shown in the condition input unit 231, since the processing head 35 is not moved while the hole h1 is being formed, the moving velocity of the processing head 35 is 0 mm/min. In the example shown in Figure 34, the amplitudes Qx and Qy are respectively 1000 μm, the frequency is 1000 Hz, the rotational angle is 0 degrees, and the interpolation calculation formula is the Akima spline interpolation.

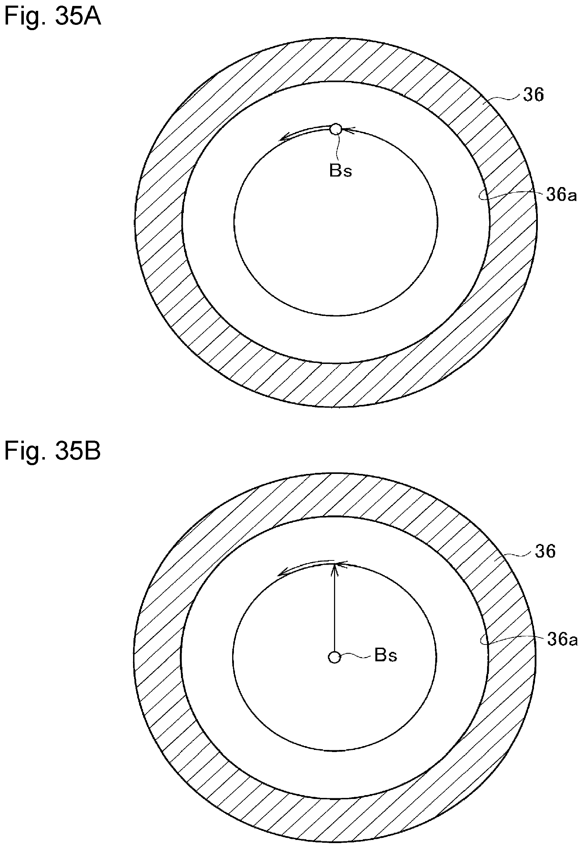

When the galvano scanner unit 32 vibrates the laser beam in the circular locus pattern Tp shown in Figure 34 by using the processing program shown in Figure 32A, a beam spot Bs of the laser beam moves in a circle within an opening 36a of the nozzle 36 as shown in Figure 35A. This makes it possible to form, in the sheet metal W, the hole h1 having a diameter of, for example, 1 mm, which is smaller than the diameter of the opening 36a. As shown in Figure 35B, the beam spot Bs is usually located at the center of the opening 36a. In this case, the laser beam may be vibrated in the circular locus pattern Tp by displacing the beam spot Bs in the direction of the end portion of the opening 36a by the distance of the radius of the hole h1 at the same time when the beam is turned on.

When the laser beam is vibrated in a circular shape, it is preferable to turn off the beam after rotating the beam by an angle exceeding 360 degrees, instead of turning off the beam after rotating the laser beam by 360 degrees. It is preferable to start to cut the sheet metal W at a starting point at which the laser beam draws a circular locus, and to turn off the beam after rotating by 360 degrees and returning to the starting point, at least after passing the starting point by a distance of a circular arc corresponding to half of the distance of the beam spot Bs. In other words, it is preferable to carry out irradiation with the laser beam in an overlapping manner since the angle exceeding 360 degrees after the laser beam has been rotated by 360 degrees and returned to the starting point.

The length in a circumferential direction for which irradiation with the laser beam is carried out in an overlapping manner may correspond to 1/4 lap, half lap, 2 laps or more.

By what degree of the angle that exceeds 360 degrees to vibrate the laser beam in a circle is set by the pierced hole time of the processing conditions set in the processing condition file. Further, the amplitudes Qx and Qy that determine the size of the hole h1 and the frequency are also set by the processing conditions.

Since the processing head 35 has a weight of about several kilograms, the more frequently the processing head 35 is moved, the more time the processing head 35 is accelerated or decelerated for, which results in the longer processing time. When the plurality of holes h1 are formed in the sheet metal W by vibrating the laser beam while the processing head 35 is stopped, the processing head 35 only needs to be moved between the positions at which the holes h1 are to be formed while the beam is turned off. As a result, the processing time can be shortened.

In Figure 31, the case in which the circular hole h1 is formed in the sheet metal W is taken as an example. However, it is possible to form a hole in an arbitrary shape by vibrating the laser beam while the processing head 35 is stopped if the hole is smaller than the opening 36a of the nozzle 36. The galvano drive control unit 57 only needs to vibrate the laser beam based on the locus pattern Tp corresponding to the shape of the hole to be formed in the sheet metal W. The locus pattern Tp only needs to have a closed shape.

As an example, the processing method for forming the hole by vibrating the laser beam while the processing head 35 is stopped is preferably used when an aluminum plate having a thickness of 1.0 mm is processed. Needless to say, this processing method can also be used when iron, stainless steel, or brass is processed. The processing method is preferably used when a thin plate having a thickness of 2.0 mm or less is processed, but it is also possible to process a sheet metal W having a thickness of more than 2.0 mm by increasing the laser output of the laser oscillator 10. The type of assist gas is not limited.

The present invention is not limited to the one or more embodiments described above, and various modifications can be made without departing from the scope of the present invention. The NC device 50 may be provided with a function of simulating the locus pattern Tp and the moving locus pattern MTp that the coordinate pattern file creation device 200 includes. The coordinate pattern file created by the coordinate pattern file creation device 200 may be stored directly in a storage unit in the NC device 50 without being stored in the coordinate pattern file database 75.

Even when the sheet metal W is processed while the processing head 35 is moved, the locus pattern display area 232 may display only the locus pattern Tp. The locus pattern display area 232 preferably displays both the locus pattern Tp and the moving locus pattern MTp. However, the locus pattern Tp and the moving locus pattern MTp may not be displayed at the same time.

The laser processing machine 100 is not limited to the processing machine for cutting the sheet metal W, and may be a laser welding machine for welding the sheet metal W.

As described above, the one or more embodiments aim to create the coordinate pattern file after confirming the locus pattern Tp (the moving locus pattern MTp) in advance, and to create a locus pattern for vibrating the laser beam in an arbitrary waveform shape. Further, the one or more embodiments aim to process the sheet metal W by vibrating the laser beam in an arbitrary waveform shape.

Reference Signs List

10 laser oscillator
20 laser processing unit
22 X-axis carriage (moving mechanism)
23 Y-axis carriage (moving mechanism)
30 collimator unit
31 collimation lens
32 galvano scanner unit (beam vibration mechanism)
33 bend mirror
34 focusing lens
35 processing head
36 nozzle
40 operation unit
50 NC device
51 NC control unit
52 processing condition setting unit
53 coordinate pattern file reading unit
54, 203 interpolation parameter calculation unit
55, 204 locus pattern calculation unit
56 locus pattern retention unit
57 galvano drive control unit
58 moving mechanism control unit
60 processing program database
70 processing condition database
75 coordinate pattern file database

80 assist gas supply device
100 laser processing machine
201 coordinate input unit
202 locus pattern simulation unit
205 coordinate pattern file creation unit
210 computer device
211 central processing unit
212 storage medium
213 main memory
214 network connection unit
215 display unit
216 operation unit
22d, 23d, 322, 324 drive unit
321, 323 scan mirror
500 locus pattern creation device
W sheet metal

## Claims

1. A coordinate pattern file creation device (200), comprising:

   a locus pattern simulation unit (202)
   **characterized by** the locus pattern simulation unit including
   an interpolation parameter calculation unit (203) configured to calculate an interpolation parameter of a predetermined interpolation calculation formula based on a first plurality of coordinate values input by means of a coordinate input unit, the first plurality of coordinate values constituting a coordinate pattern that is original data for determining a locus pattern of one cycle when a laser beam emitted from a processing head (35) of a laser processing machine (100) to irradiate a sheet metal (W) with the laser beam is vibrated; and
   a locus pattern calculation unit (204) configured to calculate a second plurality of coordinate values constituting the locus pattern based on the interpolation parameter, respective amplitudes of the locus pattern in an x-axis direction and in a y-axis direction, a frequency of the locus pattern, and a control cycle of a beam vibration mechanism (32) for vibrating the laser beam, the x-axis direction being a moving direction of the processing head (35) and the y-axis direction being a direction orthogonal to the x-axis direction;
   the locus pattern simulation unit (202) being configured to display, on a display unit (215),
   the locus pattern formed by the second plurality of coordinate values; and by the coordinate pattern file creation device further comprising a coordinate pattern file creation unit (205) configured to create a coordinate pattern file including coordinate pattern data indicating the coordinate pattern composed of the first plurality of coordinate values, the coordinate pattern file being used when an NC device (50) controls the laser processing machine (100) so as to vibrate the laser beam.

2. The coordinate pattern file creation device (200) according to claim 1, wherein the coordinate pattern file creation unit (205) is configured to create, as the coordinate pattern file, a coordinate pattern file including the coordinate pattern data and an identification value indicating the interpolation calculation formula used when the interpolation parameter calculation unit (203) has calculated the interpolation parameter.

3. The coordinate pattern file creation device (200) according to claim 1 or 2, wherein

   the locus pattern simulation unit (202) is configured to display, on the display unit (215), the locus pattern rotated by a rotational angle when the rotational angle for rotating the locus pattern is set, and
   the coordinate pattern file creation unit (205) is configured to create, as the coordinate pattern file, a coordinate pattern file including the coordinate pattern data and the rotational angle.

4. The coordinate pattern file creation device (200) according to any one of claims 1 to 3, wherein the locus pattern simulation unit (202) is configured to calculate a moving locus pattern obtained by moving the locus pattern in the moving direction based on the frequency of the locus pattern and a moving velocity of the processing head (35), and display the moving locus pattern on the display unit (215).

**5.** The coordinate pattern file creation device (200) according to any one of claims 1 to 4, wherein the locus pattern simulation unit (202) is configured to display on the display unit (215) that the locus pattern is unusable when the interpolation parameter calculation unit (203) determines that a distance between at least some adjacent coordinates in the second plurality of coordinate values exceeds a distance in which the laser beam can be moved by the beam vibration mechanism (32).

**6.** A locus pattern creation device (500),
**characterized by** the locus pattern creation device (500) being provided in an NC device (50) for controlling a laser processing machine (100) and comprising:

an interpolation parameter calculation unit (54) configured to calculate an interpolation parameter of a predetermined interpolation calculation formula based on a coordinate pattern included in a coordinate pattern file created in advance, the coordinate pattern being composed of a first plurality of coordinate values that are original data for determining a locus pattern of one cycle when a laser beam emitted from a processing head (35) of the laser processing machine (100) to irradiate a sheet metal (W) with the laser beam is vibrated;
a locus pattern calculation unit (55) configured to calculate a second plurality of coordinate values constituting the locus pattern based on the interpolation parameter, respective amplitudes of the locus pattern in an x-axis direction and a y-axis direction, the respective amplitudes being set in processing conditions for processing the sheet metal (W), a frequency of the locus pattern set in the processing conditions, and a control cycle of a beam vibration mechanism (32) provided in the laser processing machine (100) for vibrating the laser beam, the x-axis direction being a moving direction of the processing head (35) and the y-axis direction being a direction orthogonal to the x-axis direction; and
a locus pattern retention unit (56) configured to retain locus pattern data including the second plurality of coordinate values in order for a drive control unit (57) to control the beam vibration mechanism (32).

**7.** The locus pattern creation device (500) according to claim 6, wherein

the interpolation parameter calculation unit (54) is configured to rotate, when a rotational angle by which the locus pattern is rotated is set in the coordinate pattern file, the first plurality of coordinate values by the rotational angle, and calculate an interpolation parameter of cubic spline interpolation based on the rotated first plurality of coordinate values, and
the locus pattern calculation unit (55) is configured to calculate the second plurality of coordinate values based on the rotated first plurality of coordinate values, the interpolation parameter on a basis of the rotated first plurality of coordinate values, the respective amplitudes, the frequency, and the control cycle.

**8.** The locus pattern creation device (500) according to claim 6 or 7, wherein the interpolation parameter calculation unit (54) is configured to calculate the interpolation parameter by using an interpolation calculation formula indicated by an identification value of the interpolation calculation formula included in the coordinate pattern file.

**9.** The locus pattern creation device (500) according to any one of claims 6 to 8, wherein the locus pattern retention unit (56) is configured not to retain the locus pattern data when the locus pattern calculation unit (55) determines that a distance between at least some adjacent coordinates in the second plurality of coordinate values exceeds a distance in which the laser beam can be moved by the beam vibration mechanism (32).

**10.** A method for controlling, by an NC device (50), a laser processing machine (100) including a moving mechanism (22, 23) for relatively moving a processing head (35) emitting a laser beam along a surface of a sheet metal (W) with respect to the sheet metal (W) and a beam vibration mechanism (32) vibrating the laser beam emitted from the processing head (35) to irradiate the sheet metal (W) with the laser beam,
**characterized by** the method comprising:

calculating an interpolation parameter of a predetermined interpolation calculation formula based on a coordinate pattern included in a coordinate pattern file created in advance, the coordinate pattern being composed of a first plurality of coordinate values that are original data for determining a locus pattern of one cycle when the laser beam is vibrated;
calculating a second plurality of coordinate values constituting the locus pattern based on the interpolation parameter, respective amplitudes of the locus pattern in an x-axis direction and in a y-axis direction, the respective amplitudes being set in processing conditions for processing the sheet metal (W), a frequency of the locus pattern set in the processing conditions, and a control cycle of the beam vibration mechanism (32), the x-axis direction being a moving direction of the processing head (35) and the y-axis direction being a direction orthogonal to the x-axis direction;
storing, in a storage unit (56), locus pattern data including the second plurality of coordinate values; and
controlling the moving mechanism (22, 23) so as to move the processing head (35) at a speed set in the processing conditions and controlling the beam vibration mechanism (32) so as to vibrate the laser beam based on the locus pattern data stored in the storage unit (56), when the speed set in the processing conditions is a speed exceeding 0.

**11.** The method of controlling the laser processing machine (100) according to claim 10, further comprising controlling the moving mechanism (22, 23) so as not to move the processing head (35) and controlling the beam vibration mechanism (32) so as to vibrate the laser beam based on the locus pattern data stored in the storage unit (56), when the speed set in the processing conditions is 0.

## Patentansprüche

**1.** Koordinatenmusterdatei-Erzeugungsvorrichtung (200), die Folgendes umfasst:

eine Ortsmustersimulationseinheit (202)
**dadurch gekennzeichnet,** das die Ortsmustersimulationseinheit beinhaltet:

eine Interpolationsparameter-Berechnungseinheit (203), die dazu konfiguriert ist, einen Interpolationsparameter einer vorgegebenen Interpolationsberechnungsformel auf der Grundlage einer ersten Vielzahl von Koordinatenwerten zu berechnen, die mittels einer Koordinateneingabeeinheit eingegeben werden, wobei die erste Vielzahl von Koordinatenwerten ein Koordinatenmuster bildet, bei dem es sich um Originaldaten zum Bestimmen eines Ortsmusters eines Zyklus handelt, wenn ein von einem Bearbeitungskopf (35) einer Laserbearbeitungsmaschine (100) zum Bestrahlen eines Blechs (W) mit dem Laserstrahl emittierter Laserstrahl in Schwingung versetzt wird; und
eine Ortsmuster-Berechnungseinheit (204), die dazu konfiguriert ist, eine zweite Vielzahl von Koordinatenwerten, die das Ortsmuster bilden, auf der Grundlage des Interpolationsparameters, jeweiliger Amplituden des Ortsmusters in einer x-Achsen-Richtung und in einer y-Achsen-Richtung, einer Frequenz des Ortsmusters und eines Steuerzyklus eines Strahlvibrationsmechanismus (32) zum Vibrieren des Laserstrahls zu berechnen, wobei die x-Achsen-Richtung eine Bewegungsrichtung des Bearbeitungskopfes (35) ist und die y-Achsen-Richtung eine Richtung orthogonal zur x-Achsen-Richtung ist;
wobei die Ortsmuster-Simulationseinheit (202) dazu konfiguriert ist, auf einer Anzeigeeinheit (215) das Ortsmuster anzuzeigen, das durch die zweite Vielzahl von Koordinatenwerten gebildet wird; und
**dadurch,** dass die Koordinatenmusterdatei-Erzeugungsvorrichtung des Weiteren Folgendes umfasst:
eine Koordinatenmusterdatei-Erzeugungseinheit (205), die dazu konfiguriert ist, eine Koordinatenmusterdatei zu erzeugen, die Koordinatenmusterdaten enthält, welche das aus der ersten Vielzahl von Koordinatenwerten zusammengesetzte Koordinatenmuster angeben, wobei die Koordinatenmusterdatei verwendet wird, wenn eine NC-Vorrichtung (50) die Laserbearbeitungsmaschine (100) steuert, um den Laserstrahl in Schwingung zu versetzen.

**2.** Koordinatenmusterdatei-Erzeugungsvorrichtung (200) nach Anspruch 1, wobei die Koordinatenmusterdatei-Erzeugungseinheit (205) dazu konfiguriert ist, als Koordinatenmusterdatei eine Koordinatenmusterdatei zu erzeugen, welche die Koordinatenmusterdaten und einen Identifikationswert enthält, der die Interpolationsberechnungsformel angibt, die verwendet wird, wenn die Interpolationsparameter-Berechnungseinheit (203) den Interpolationsparameter berechnet hat.

**3.** Koordinatenmusterdatei-Erzeugungsvorrichtung (200) nach Anspruch 1 oder 2, wobei

die Ortsmuster-Simulationseinheit (202) dazu konfiguriert ist, auf der Anzeigeeinheit (215) das um einen Drehwinkel gedrehte Ortsmuster anzuzeigen, wenn der Drehwinkel zum Drehen des Ortsmusters eingestellt ist, und
die Koordinatenmusterdatei-Erzeugungseinheit (205) dazu konfiguriert ist, als die Koordinatenmusterdatei eine Koordinatenmusterdatei zu erzeugen, welche die Koordinatenmusterdaten und den Drehwinkel enthält.

**4.** Koordinatenmusterdatei-Erzeugungsvorrichtung (200) nach einem der Ansprüche 1 bis 3, wobei die Ortsmustersimulationseinheit (202) dazu konfiguriert ist, ein bewegtes Ortsmuster zu berechnen, das durch Bewegen des Ortsmusters in der Bewegungsrichtung auf der Grundlage der Frequenz des Ortsmusters und einer Bewegungsgeschwindigkeit des Bearbeitungskopfes (35) erhalten wird, und das bewegte Ortsmuster auf der Anzeigeeinheit (215) anzuzeigen.

5. Koordinatenmusterdatei-Erzeugungsvorrichtung (200) nach einem der Ansprüche 1 bis 4, wobei die Ortsmuster-Simulationseinheit (202) dazu konfiguriert ist, auf der Anzeigeeinheit (215) anzuzeigen, dass das Ortsmuster unbrauchbar ist, wenn die Interpolationsparameter-Berechnungseinheit (203) bestimmt, dass ein Abstand zwischen mindestens einigen benachbarten Koordinaten in der zweiten Vielzahl von Koordinatenwerten einen Abstand überschreitet, in dem der Laserstrahl durch den Strahlvibrationsmechanismus (32) bewegt werden kann.

6. Ortsmuster-Erzeugungsvorrichtung (500),
**dadurch gekennzeichnet, dass** die Ortsmustererzeugungsvorrichtung (500) in einer NC-Vorrichtung (50) zur Steuerung einer Laserbearbeitungsmaschine (100) vorgesehen ist und umfasst:

eine Interpolationsparameter-Berechnungseinheit (54), die dazu konfiguriert ist, einen Interpolationsparameter einer vorgegebenen Interpolationsberechnungsformel auf der Grundlage eines Koordinatenmusters zu berechnen, das in einer im Voraus erzeugten Koordinatenmusterdatei enthalten ist, wobei das Koordinatenmuster aus einer ersten Vielzahl von Koordinatenwerten besteht, bei denen es sich um Originaldaten zum Bestimmen eines Ortsmusters eines Zyklus handelt, wenn ein von einem Bearbeitungskopf (35) der Laserbearbeitungsmaschine (100) zum Bestrahlen eines Blechs (W) mit dem Laserstrahl emittierter Laserstrahl in Schwingung versetzt wird;
eine Ortsmuster-Berechnungseinheit (55), die dazu konfiguriert ist, eine zweite Vielzahl von Koordinatenwerten, die das Ortsmuster bilden, auf der Grundlage des Interpolationsparameters, jeweiliger Amplituden des Ortsmusters in einer x-Achsen-Richtung und in einer y-Achsen-Richtung, wobei die jeweiligen Amplituden in den Bearbeitungsbedingungen für die Bearbeitung des Blechs (W) eingestellt sind, einer Frequenz des Ortsmusters, die in den Bearbeitungsbedingungen eingestellt ist, und eines Steuerzyklus eines Strahlvibrationsmechanismus (32), der in der Laserbearbeitungsmaschine (100) zum Vibrieren des Laserstrahls vorgesehen ist, zu berechnen, wobei die x-Achsen-Richtung eine Bewegungsrichtung des Bearbeitungskopfes (35) ist und die y-Achsen-Richtung eine Richtung orthogonal zur x-Achsen-Richtung ist; und
eine Ortsmuster-Speichereinheit (56), die dazu konfiguriert ist, Ortsmusterdaten einschließlich der zweiten Vielzahl von Koordinatenwerten zu speichern, damit eine Antriebssteuereinheit (57) den Strahlvibrationsmechanismus (32) steuern kann.

7. Ortsmuster-Erzeugungsvorrichtung (500) nach Anspruch 6, wobei

die Interpolationsparameter-Berechnungseinheit (54) dazu konfiguriert ist, wenn ein Drehwinkel, um den das Ortsmuster gedreht wird, in der Koordinatenmusterdatei eingestellt ist, die erste Vielzahl von Koordinatenwerten um den Drehwinkel zu drehen und einen Interpolationsparameter der kubischen Spline-Interpolation auf der Grundlage der gedrehten ersten Vielzahl von Koordinatenwerten zu berechnen, und
die Ortsmuster-Berechnungseinheit (55) dazu konfiguriert ist, die zweite Vielzahl von Koordinatenwerten auf der Grundlage der gedrehten ersten Vielzahl von Koordinatenwerten, des Interpolationsparameters auf der Grundlage der gedrehten ersten Vielzahl von Koordinatenwerten, der jeweiligen Amplituden, der Frequenz und des Steuerzyklus zu berechnen.

8. Ortsmuster-Erzeugungsvorrichtung (500) nach Anspruch 6 oder 7, wobei die Interpolationsparameter-Berechnungseinheit (54) dazu konfiguriert ist, den Interpolationsparameter unter Verwendung einer Interpolationsberechnungsformel zu berechnen, die durch einen Identifikationswert der in der Koordinatenmusterdatei enthaltenen Interpolationsberechnungsformel angezeigt wird.

9. Ortsmuster-Erzeugungsvorrichtung (500) nach einem der Ansprüche 6 bis 8, wobei die Ortsmuster-Speichereinheit (56) dazu konfiguriert ist, die Ortsmusterdaten nicht zu speichern, wenn die Ortsmuster-Berechnungseinheit (55) bestimmt, dass ein Abstand zwischen mindestens einigen benachbarten Koordinaten in der zweiten Vielzahl von Koordinatenwerten einen Abstand überschreitet, in dem der Laserstrahl durch den Strahlvibrationsmechanismus (32) bewegt werden kann.

10. Verfahren zum Steuern, durch eine NC-Vorrichtung (50), einer Laserbearbeitungsmaschine (100) mit einem Bewegungsmechanismus (22, 23) zum relativen Bewegen eines einen Laserstrahl emittierenden Bearbeitungskopfes (35) entlang einer Oberfläche eines Blechs (W) in Bezug auf das Blech (W) und einem Strahlvibrationsmechanismus (32), der den von dem Bearbeitungskopf (35) emittierten Laserstrahl in Schwingung versetzt, um das Blech (W) mit dem Laserstrahl zu bestrahlen,
**dadurch gekennzeichnet, dass** das Verfahren umfasst:

Berechnen eines Interpolationsparameters einer vorgegebenen Interpolationsberechnungsformel auf der Grundlage eines Koordinatenmusters, das in einer im Voraus erzeugten Koordinatenmusterdatei enthalten ist, wobei das Koordinatenmuster aus einer ersten Vielzahl von Koordinatenwerten besteht, bei denen es sich um Originaldaten zum Bestimmen eines Ortsmusters eines Zyklus handelt, wenn der Laserstrahl in Schwingung versetzt wird;
Berechnen einer zweiten Vielzahl von Koordinatenwerten, die das Ortsmuster bilden, auf der Grundlage des Interpolationsparameters, jeweiliger Amplituden des Ortsmusters in einer x-Achsen-Richtung und in einer y-Achsen-Richtung, wobei die jeweiligen Amplituden in den Bearbeitungsbedingungen für die Bearbeitung des Blechs (W) eingestellt sind, einer Frequenz des Ortsmusters, die in den Bearbeitungsbedingungen eingestellt ist, und eines Steuerzyklus des Strahlvibrationsmechanismus (32), wobei die x-Achsen-Richtung eine Bewegungsrichtung des Bearbeitungskopfes (35) ist und die y-Achsen-Richtung eine Richtung orthogonal zur x-Achsen-Richtung ist;
Speichern, in einer Speichereinheit (56), von Ortsmusterdaten, welche die zweite Vielzahl von Koordinatenwerten enthalten; und
Steuern des Bewegungsmechanismus (22, 23), um den Bearbeitungskopf (35) mit einer in den Bearbeitungsbedingungen eingestellten Geschwindigkeit zu bewegen, und Steuern des Strahlvibrationsmechanismus (32), um den Laserstrahl auf der Grundlage der in der Speichereinheit (56) gespeicherten Ortsmusterdaten in Schwingung zu versetzen, wenn die in den Bearbeitungsbedingungen eingestellte Geschwindigkeit eine Geschwindigkeit größer als 0 ist.

**11.** Verfahren zum Steuern der Laserbearbeitungsmaschine (100) nach Anspruch 10, des Weiteren umfassend das Steuern des Bewegungsmechanismus (22, 23) solcherart, dass der Bearbeitungskopf (35) nicht bewegt wird, und Steuern des Strahlvibrationsmechanismus (32) solcherart, dass der Laserstrahl auf der Grundlage der in der Speichereinheit (56) gespeicherten Ortsmusterdaten in Schwingung versetzt wird, wenn die in den Bearbeitungsbedingungen eingestellte Geschwindigkeit 0 ist.

## Revendications

**1.** Dispositif de création de fichier de modèle de coordonnées (200), comprenant :

une unité de simulation de modèle de locus (202)
**caractérisé par** l'unité de simulation de modèle de locus incluant
une unité de calcul de paramètre d'interpolation (203) configurée pour calculer un paramètre d'interpolation d'une formule de calcul d'interpolation prédéterminée selon une première pluralité de valeurs de coordonnées entrées au moyen d'une unité d'entrée de coordonnées, la première pluralité de valeurs de coordonnées constituant un modèle de coordonnées qui constitue des données originales pour déterminer un modèle de locus d'un cycle, lorsqu'un faisceau laser émis depuis une tête de traitement (35) d'une machine de traitement au laser (100), pour irradier une feuille de métal (W) avec le faisceau laser, vibre ; et
une unité de calcul de modèle de locus (204) configurée pour calculer une deuxième pluralité de valeurs de coordonnées constituant le modèle de locus selon le paramètre d'interpolation, par rapport à des amplitudes du modèle de locus dans une direction d'axe x et dans une direction d'axe y, une fréquence du modèle de locus et un cycle de commande d'un mécanisme de vibration de faisceau (32) pour faire vibrer le faisceau laser, la direction d'axe x constituant une direction de déplacement de la tête de traitement (35) et la direction d'axe y constituant une direction orthogonale à la direction d'axe x ;
l'unité de simulation de modèle de locus (202) étant configurée pour afficher, sur une unité d'affichage (215), le modèle de locus constitué par la deuxième pluralité de valeurs de coordonnées ; et par le dispositif de création de fichier de modèle de coordonnées comprenant en outre
une unité de création de fichier de modèle de coordonnées (205) configurée pour créer un fichier de modèle de coordonnées incluant des données de modèle de coordonnées indiquant le modèle de coordonnées composé de la première pluralité de valeurs de coordonnées, le fichier de modèle de coordonnées étant utilisé lorsqu'un dispositif CN (50) commande la machine de traitement au laser (100) de sorte à faire vibrer le faisceau laser.

**2.** Le dispositif de création de fichier de modèle de coordonnées (200) selon la revendication 1, dans lequel l'unité de création de fichier de modèle de coordonnées (205) est configurée pour créer, en tant que le ficher de modèle de coordonnées, un fichier de modèle de coordonnées incluant les données de modèle de coordonnées et une valeur d'identification indiquant la formule de calcul d'interpolation utilisée lorsque l'unité de calcul de paramètre d'interpolation (203) a calculé le paramètre d'interpolation.

**3.** Le dispositif de création de fichier de modèle de coordonnées (200) selon la revendication 1 ou 2, dans lequel

l'unité de simulation de modèle de locus (202) est configurée pour afficher, sur l'unité d'affichage (215), le modèle de locus tourné selon un angle de rotation lorsque l'angle de rotation pour tourner le modèle de locus est défini, et
l'unité de création de fichier de modèle de coordonnées (205) est configurée pour créer, en tant que le fichier de modèle de coordonnées, un fichier de modèle de coordonnées incluant les données de modèle de coordonnées et l'angle de rotation.

**4.** Le dispositif de création de fichier de modèle de coordonnées (200) selon l'une quelconque des revendications 1 à 3, dans lequel l'unité de simulation de modèle de locus (202) est configurée pour calculer un modèle de locus mobile obtenu en déplaçant le modèle de locus dans la direction de déplacement selon la fréquence du modèle de locus et une vélocité de déplacement de la tête de traitement (35), et afficher le modèle de locus mobile sur l'unité d'affichage (215).

**5.** Le dispositif de création de fichier de modèle de coordonnées (200) selon l'une quelconque des revendications 1 à 4, dans lequel l'unité de simulation de modèle de locus (202) est configurée pour afficher sur l'unité d'affichage (215) que le modèle de locus est inutilisable lorsque l'unité de calcul de paramètre d'interpolation (203) détermine qu'une distance entre au moins certaines coordonnées adjacentes dans la deuxième pluralité de valeurs de coordonnées dépassent une distance dans laquelle le faisceau laser peut être déplacé par le mécanisme de vibration de faisceau (32).

**6.** Dispositif de création de modèle de locus (500),
**caractérisé par** le dispositif de création de modèle de locus (500) mis à disposition dans un dispositif CN (50) pour commander une machine de traitement au laser (100) et comprenant :

une unité de calcul de paramètre d'interpolation (54) configurée pour calculer un paramètre d'interpolation d'une formule de calcul d'interpolation prédéterminée selon un modèle de coordonnées inclus dans un fichier de modèle de coordonnées créé à l'avance, le modèle de coordonnées étant composé d'une première pluralité de valeurs de coordonnées qui constitue des données originales pour déterminer un modèle de locus d'un cycle, lorsqu'un faisceau laser émis depuis une tête de traitement (35) d'une machine de traitement au laser (100), pour irradier une feuille de métal (W) avec le faisceau laser, vibre ;
une unité de calcul de modèle de locus (55) configurée pour calculer une deuxième pluralité de valeurs de coordonnées constituant le modèle de locus selon le paramètre d'interpolation, par rapport à des amplitudes du modèle de locus dans une direction d'axe x et dans une direction d'axe y, les amplitudes respectives étant définies dans des conditions de traitement pour traiter la feuille de métal (W), une fréquence du modèle de locus définie dans les conditions de traitement, et un cycle de commande d'un mécanisme de vibration de faisceau (32) disposé dans la machine de traitement au laser (100) pour faire vibrer le faisceau laser, la direction d'axe x constituant une direction de déplacement de la tête de traitement (35) et la direction d'axe y constituant une direction orthogonale à la direction d'axe x ; et
une unité de conservation de modèle de locus (56) configurée pour conserver des données de modèle de locus incluant la deuxième pluralité de valeurs de coordonnées afin qu'une unité de commande d'entraînement (57) puisse commander le mécanisme de vibration de faisceau (32).

**7.** Le dispositif de création de modèle de locus (500) selon la revendication 6, dans lequel

l'unité de calcul de paramètre d'interpolation (54) est configurée pour faire tourner, lorsqu'un angle de rotation par lequel le modèle de locus est tourné est défini dans le fichier de modèle de coordonnées, la première pluralité de valeurs de coordonnées selon l'angle de rotation, et calculer un paramètre d'interpolation d'interpolation par spline cubique selon la première pluralité tournée de valeurs de coordonnées, et
l'unité de calcul de modèle de locus (55) est configurée pour calculer la deuxième pluralité de valeurs de coordonnées selon la première pluralité tournée de valeurs de coordonnées, le paramètre d'interpolation sur une base de la première pluralité tournée de valeurs de coordonnées, les amplitudes respectives, la fréquence et le cycle de commande.

**8.** Le dispositif de création de modèle de locus (500) selon la revendication 6 ou 7, dans lequel l'unité de calcul de paramètre d'interpolation (54) est configurée pour calculer le paramètre d'interpolation en utilisant une formule de calcul d'interpolation indiquée par une valeur d'identification de la formule de calcul d'interpolation incluse dans le fichier de modèle de coordonnées.

**9.** le dispositif de création de modèle de locus (500) selon l'une quelconque des revendications 6 à 8, dans lequel l'unité de conservation de modèle de locus (56) est configurée pour ne pas conserver les données de modèle de locus lorsque l'unité de calcul de modèle de locus (55) détermine qu'une distance entre au moins certaines coordonnées adjacentes dans la deuxième pluralité de valeurs de coordonnées dépassent une distance dans laquelle le faisceau laser peut être déplacé par le mécanisme de vibration de faisceau (32).

**10.** Procédé de commande, par un dispositif CN (50), d'une machine de traitement au laser (100) incluant un mécanisme de déplacement (22, 23) pour déplacer relativement une tête de traitement (35) émettant un faisceau laser le long d'une surface d'une feuille de métal (W) par rapport à la feuille de métal (W) et un mécanisme de vibration de faisceau (32) faisant vibrer le faisceau laser émis depuis la tête de traitement (35) pour irradier la feuille de métal (W) avec le faisceau laser,
**caractérisé par** le procédé comprenant :

un calcul d'un paramètre d'interpolation d'une formule de calcul d'interpolation prédéterminée selon un modèle de coordonnées inclus dans un fichier de modèle de coordonnées créé à l'avance, le modèle de coordonnées étant composé d'une première pluralité de valeurs de coordonnées qui constituent des données originales pour déterminer un modèle de locus d'un cycle lorsque le faisceau laser vibre ;
un calcul d'une deuxième pluralité de valeurs de coordonnées constituant le modèle de locus selon le paramètre d'interpolation, par rapport à des amplitudes du modèle de locus dans une direction d'axe x et dans une direction d'axe y, les amplitudes respectives étant définies dans des conditions de traitement pour traiter la feuille de métal (W), une fréquence du modèle de locus définie dans les conditions de traitement, et un cycle de commande d'un mécanisme de vibration de faisceau (32), la direction d'axe x constituant une direction de déplacement de la tête de traitement (35) et la direction d'axe y constituant une direction orthogonale à la direction d'axe x ;
un stockage, dans une unité de stockage (56), de données de modèle de locus incluant la deuxième pluralité de valeurs de coordonnées ; et
une commande du mécanisme de déplacement (22, 23) de sorte à déplacer la tête de traitement (35) à une vitesse définie dans les conditions de traitement et une commande du mécanisme de vibration de faisceau (32) de sorte à faire vibrer le faisceau laser selon les données de modèle de locus stockées dans l'unité de stockage (56), lorsque la vitesse définie dans les conditions de traitement est une vitesse dépassant 0.

**11.** Le procédé de commande de la machine de traitement au laser (100) selon la revendication 10, comprenant en outre une commande du mécanisme de déplacement (100, 23) de sorte à ne pas déplacer la tête de traitement (23) et une commande du mécanisme de vibration de faisceau (32) de sorte à faire vibrer le faisceau laser selon les données de modèle de locus stockées dans l'unité de stockage (56), lorsque la vitesse définie dans les conditions de traitement est 0.

100
PROCESSING PROGRAM DATABASE
60
PROCESSING CONDITION DATABASE
70
COORDINATE PATTERN FILE DATABASE
75
ASSIST GAS SUPPLY DEVICE
80
NC DEVICE
50
DISPLAY UNIT
90
OPERATION UNIT
40
10
12
20
21
W
22
35
36
36a
23
30
X
Y
Z

Fig. 1

Fig. 2

30
33
324
323
31
321
322
32
34
35
36
36a

Fig. 3

33
θ
34
EFL
W
Δs

Fig. 4
200
201
COORDINATE INPUT UNIT
202
LOCUS PATTERN SIMULATION UNIT
203
INTERPOLATION PARAMETER CALCULATION UNIT
204
LOCUS PATTERN CALCULATION UNIT
205
COORDINATE PATTERN FILE CREATION UNIT

Fig. 5

215
DISPLAY UNIT
200
210
COMPUTER DEVICE
213
MAIN MEMORY
211
216
OPERATION UNIT
CPU
212
STORAGE MEDIUM
COORDINATE PATTERN FILE CREATION PROGRAM
214
NETWORK CONNECTION UNIT

Fig. 6

Fig. 7

START
DISPLAY COORDINATE VALUE INPUT WINDOW
S201
INPUT COORDINATE VALUES IN COORDINATE VALUE INPUT WINDOW
S202
S203
NO
HAS INSTRUCTION FOR SIMULATION BEEN GIVEN?
YES
CALCULATE INTERPOLATION PARAMETER OF CUBE SPLINE INTERPOLATION BASED ON INPUT COORDINATE VALUES
S204
CREATE LOCUS PATTERN BASED ON COORDINATE VALUES, INTERPOLATION PARAMETER, AND SIMULATION CONDITIONS
S205
CREATE MOVING LOCUS PATTERN BASED ON SIMULATION CONDITIONS AND DISPLAY LOCUS PATTERN AND MOVING LOCUS PATTERN ON LOCUS PATTERN DISPLAY WINDOW
S206
S207
YES
HAS INSTRUCTION TO OUTPUT COORDINATE PATTERN FILE BEEN GIVEN?
NO
S208
YES
HAS ANY OF AMPLITUDES Qx AND Qy, ROTATIONAL ANGLE, INTERPOLATION CALCULATION FORMULA, AND FREQUENCY BEEN CHANGED?
NO
S209
HAS MOVING VELOCITY BEEN CHANGED?
NO
YES
CREATE COORDINATE PATTERN FILE
S210
END

Fig. 8

S205
CALCULATE NUMBER OF COORDINATES REQUIRED FOR LOCUS PATTERN CORRESPONDING TO SET FREQUENCY
S2051
CALCULATE RESPECTIVE COORDINATE VALUES OF LOCUS PATTERN
S2052
ENLARGE OR REDUCE COORDINATE DATA OF LOCUS PATTERN ACCORDING TO SET AMPLITUDES Qx AND Qy
S2053
DETERMINE WHETHER OR NOT DISTANCE BETWEEN COORDINATES IS WITHIN LIMIT VALUE
S2054

220
221
222
223
...
No.
Start
x
y
Clear
Simulation
224
225
100
50
0

Fig. 9

Fig. 10

220
221
222
223
224
225
...
No.
Start
x
y
0 0 0
1 −50 25
2 0 50
3 50 25
4 0 0
5 −50 −25
6 0 −50
7 50 −25
8 0 0
9 0 0
10 0 0
11 0 0
12 0 0
13 0 0
14 0 0
15 0 0
Clear
Simulation
50
0
−50
−50
0
50
y
x

Fig. 11

232
230
231
150
100
50
0
−50
−100
y
x
−50
0
50
100
150
200
250
300
MTp
MTp1
MTp2
MTp3
Tp
Speed
6000
mm/min
Qx
100
um
Qy
100
um
Frequency
1000
Hz
Angle
0
°
Spline
Natural
233
Output

Fig. 12

230
231
232
233
MTp
Tp
MTp1
MTp2
MTp3
50
0
−50
−100
y
x
−50
0
50
100
150
200
Speed
3000
mm/min
Qx
100
um
Qy
100
um
Frequency
1000
Hz
Angle
0
°
Spline
Natural
Output

Fig. 13

232
230
231
Tp
MTp
MTp1
MTp2
MTp3
50
0
-50
-100
y
-50
0
50
100
150
200
250
x
Speed
9000
mm/min
Qx
100
um
Qy
100
um
Frequency
1000
Hz
Angle
0
°
Spline
Natural
233
Output

Fig. 14

230
231
232
MTp
Tp
MTp1
MTp2
MTp3
100
0
-100
y
x
-100
0
100
200
300
Speed
6000
mm/min
Qx
200
um
Qy
200
um
Frequency
1000
Hz
Angle
0
°
Spline
Natural
233
Output

Fig. 15

232
230
231
Speed
6000
mm/min
Qx
50
um
Qy
50
um
Frequency
1000
Hz
Angle
0
°
Spline
Natural
233
Output
MTp
Tp
MTp1
MTp2
40
20
0
-20
-40
-60
y
x
-20
0
20
40
60
80
100
120
140

Fig. 16

230
231
232
MTp
MTp1
MTp2
MTp3
Tp
50
0
-50
y -100
-50
0
50
100
150
200
x
Speed
6000
mm/min
Qx
100
um
Qy
100
um
Frequency
2000
Hz
Angle
0
°
Spline
Natural
233
Output

Fig. 17

230
231
232
233
Tp
MTp(MTp1)
Speed
6000
mm/min
Qx
100
um
Qy
100
um
Frequency
500
Hz
Angle
0
°
Spline
Natural
Output
50
0
-50
100
y
x

Fig. 18

230
231
232
Speed
6000
mm/min
Qx
100
um
Qy
100
um
Frequency
1000
Hz
Angle
90
°
Spline
Natural
233
Output
MTp
MTp1
MTp2
Tp
40
20
0
−20
−40
−80
−60
−40
−20
0
20
40
60
80
y
x

Fig. 19
232
230
231
Speed
6000
mm/min
Qx
100
um
Qy
100
um
Frequency
1000
Hz
Angle
0
°
Spline
Akima
233
Output
Tp
MTp1
MTp2
MTp
y
x
40
20
0
-20
-40
-80
-60
-40
-20
0
20
40
60
80

Fig. 20

AMPLITUDE IN X-AXIS DIRECTION
TIME

AMPLITUDE IN Y-AXIS DIRECTION
TIME

Fig. 21

x
3
2
1
y

Fig. 22

220
221
222
223
224
225
...
No.
Start
x
y
0 0 0
1 25 25
2 50 48
3 25 50
4 0 50
5 −25 50
6 −50 48
7 −25 25
8 0 0
9 0 0
10 0 0
11 0 0
12 0 0
13 0 0
14 0 0
15 0 0
Clear
Simulation
50
0
−50
x
y

Fig. 23

100
50
0
-50
0
50
y
x

Fig. 24
232
230
231
Tp
60
40
20
0
-20
y
x
-40
-20
0
20
40
60
80
MTp1
MTp2
MTp3
MTp
Speed
2000
mm/min
Qx
100
um
Qy
100
um
Frequency
2000
Hz
Angle
0
°
Spline
Natural
233
Output

Fig. 25

232
230
231
MTp
MTp1
MTp2
MTp3
Tp
Tex
Tex
Tex
Tex
1500
1000
500
0
-500
-1000
-500
0
500
1000
1500
2000
2500
x
Speed
80000
mm/min
Qx
2000
um
Qy
2000
um
Frequency
1400
Hz
Angle
0
°
Spline
Natural
233
Output

Fig. 26

AMPLITUDE IN X-AXIS DIRECTION
TIME

AMPLITUDE IN Y-AXIS DIRECTION
TIME

Fig. 27

50
0
-50
0
50
y
x

Fig. 28

100
50
0
-50
0
50
y
x

Fig. 29

50
NC DEVICE
500
LOCUS PATTERN CREATION DEVICE
75
COORDINATE PATTERN FILE DATABASE
53
COORDINATE PATTERN FILE READING UNIT
54
INTERPOLATION PARAMETER CALCULATION UNIT
55
LOCUS PATTERN CALCULATION UNIT
56
LOCUS PATTERN RETENTION UNIT
32
GALVANO SCANNER UNIT
DRIVE UNIT
322,324
60
PROCESSING PROGRAM DATABASE
51
NC CONTROL UNIT
57
GALVANO DRIVE CONTROL UNIT
22,23
MOVING MECHANISM
DRIVE UNIT
22D,23D
70
PROCESSING CONDITION DATABASE
52
PROCESSING CONDITION SETTING UNIT
58
MOVING MECHANISM CONTROL UNIT

Fig. 30

START
READ OUT COORDINATE PATTERN FILE FROM COORDINATE PATTERN FILE DATABASE
S501
ROTATE COORDINATE PATTERN AT ANGLE SET IN COORDINATE PATTERN FILE
S502
CALCULATE INTERPOLATION PARAMETER OF CUBE SPLINE INTERPOLATION
S503
CALCULATE NUMBER OF COORDINATES REQUIRED FOR LOCUS PATTERN CORRESPONDING TO FREQUENCY SET IN PROCESSING CONDITION FILE
S504
CALCULATE RESPECTIVE COORDINATE VALUES OF LOCUS PATTERN
S505
ENLARGE OR REDUCE COORDINATE DATA OF LOCUS PATTERN ACCORDING TO AMPLITUDES Qx AND Qy SET IN PROCESSING CONDITION FILE
S506
S507
ARE DISTANCES BETWEEN COORDINATES WITHIN LIMIT VALUE?
NO
YES
WRITE LOCUS PATTERN DATA INTO LOCUS PATTERN RETENTION UNIT
S508
END

Fig. 31

W
h1
h1
h1

Y
X

Fig. 32A

```
G90G92 X0. Y0.
M100
E103
G00X5.Y5.
M103
G91
E104
G00X5.
G24
G00X5.
G24
G00X5.
G24
G00X5.
G24
G00X5.
G24
G00X5.
G24
G00X5.
G24
  .
  .
  .
```

Fig. 32B

```
G90G92 X0. Y0.
M100
E103
G00X5.Y5.
M103
G91
G02I-0.5
G00X5.
G02I-0.5
G00X5.
G02I-0.5
G00X5.
G02I-0.5
G00X5.
G02I-0.5
G00X5.
G02I-0.5
G00X5.
G02I-0.5
  .
  .
  .
```

Fig. 33

220
221
222
223
224
225
...
50
0
-50
y
x
Clear
Simulation

| No. | Start | x | y |
|---|---|---|---|
| 0 | ◉ | 0 | 50 |
| 1 | ○ | 35.4 | 35.4 |
| 2 | ○ | 50 | 0 |
| 3 | ○ | 35.4 | −35.4 |
| 4 | ○ | 0 | −50 |
| 5 | ○ | −35.4 | −35.4 |
| 6 | ○ | −50 | 0 |
| 7 | ○ | −35.4 | 35.4 |
| 8 | ○ | 0 | 0 |
| 9 | ○ | 0 | 0 |
| 10 | ○ | 0 | 0 |
| 11 | ○ | 0 | 0 |
| 12 | ○ | 0 | 0 |
| 13 | ○ | 0 | 0 |
| 14 | ○ | 0 | 0 |
| 15 | ○ | 0 | 0 |

Fig. 34

232
Tp
230
231
Speed
0
mm/min
Qx
1000
um
Qy
1000
um
Frequency
1000
Hz
Angle
0
°
Spline
Akima
400
200
0
-200
-400
y
-800
-600
-400
-200
0
200
400
600
800
x
233
Output

Fig. 35A

36
Bs
36a

Fig. 35B

36
36a
Bs

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2508293 A1
- US 2018164793 A1
- JP 6592563 B
- JP 2019155404 A